# EUROPEAN PATENT SPECIFICATION

(11) **EP 0 976 625 B1**
(45) Date of publication and mention of the grant of the patent: **20.04.2005**
(21) Application number: 99114256.3
(22) Date of filing: 28.07.1999
(51) Int. Cl.: B60R 21/32, B60R 21/01, G01V 3/08

(54) **Passenger detecting system and air bag apparatus using the same**
Vorrichtung zur Sitzbelegungserkennung und Airbagssystem unter Verwendung derselben
Système de détection de passager et système airbag l 'utilisant

(30) Priority: 28.07.1998 JP 21294998; 31.08.1998 JP 24589498
(43) Date of publication of application: 02.02.2000
(73) Proprietor: Honda elesys Co., Ltd., Tochigi 321-0905 (JP)
(72) Inventor: Oka, Yoshitaka, Chuo-ku, Osaka-shi, Osaka (JP); Baba, Satoshi, Chuo-ku, Osaka-shi, Osaka (JP)
(74) Representative: Betten & Resch

(56) References cited:
- EP-A- 0 838 697
- WO-A-97/31238
- PATENT ABSTRACTS OF JAPAN vol. 2000, no. 01, 31 January 2000 (2000-01-31) & JP 11 271463 A (NEC HOME ELECTRON LTD;NEC ROBOTICS ENG LTD), 8 October 1999 (1999-10-08)

## Description

### Background of the Invention

### 1. Field of the Invention

The present invention relates to a passenger detecting system and an air bag apparatus. More particularly, the present invention relates to the technique for detecting the existence or non-existence of a passenger on a seat of an automobile and for controlling the expansion of an air bag of an air bag apparatus.

### 2. Description of the Related Art

Generally, an air bag apparatus is an apparatus to ease the impact which a driver and passengers receive upon collision of an automobile. The air bag apparatus has been necessary for the safety of the automobile. Recently, the air bag apparatus is installed in a passenger seat in addition to a driving seat.

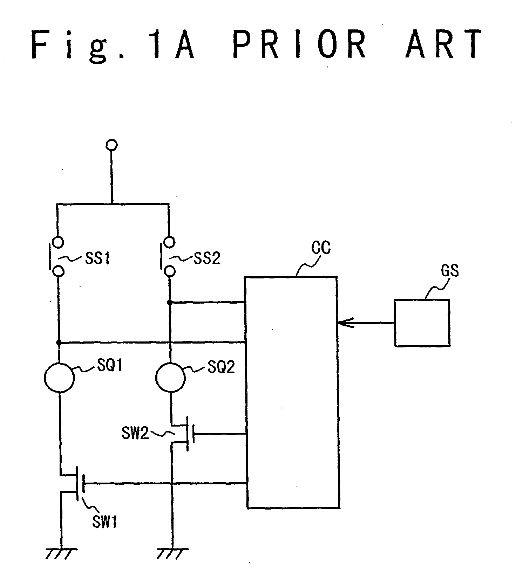

For example, as shown in Fig. 1A, a first conventional air bag apparatus is composed of a driving seat side squib circuit, a passenger seat side squib circuit, an electronic acceleration sensor GS as a collision detecting sensor, and a control circuit CC. The driving seat side squib circuit includes a series circuit of a safing sensor SS1, a squib SQ1, and a switching element SW1 such as an electric field effect type transistor. The passenger seat side squib circuit includes a series circuit of a safing sensor SS2, a squib SQ2, and a switching element SW2 such as an electric field effect type transistor. The control circuit CC has a function to detect collision of an automobile in accordance with the output signal of the electronic acceleration sensor GS and to supply a signal to the gates of the switching elements SW1 and SW2.

According to the first conventional air bag apparatus, when the automobile collides because of some causes, the switch contacts of the safing sensors SS1 and SS2 are closed in response to the relatively small acceleration. Then, the squib circuits on the driving seat side and the passenger seat side are set to their operable states. When the control circuit CC reliably determines the collision of the automobile in accordance with the signal from the electronic acceleration sensor GS, squib control signals are supplied to the gates of the switching elements SW1 and SW2 to set to the ON state. By this, a current flows through each squib circuit. As a result, the squib circuits SQ1 and SQ2 are heated and the air bags on the driving seat side and the passenger seat side are developed, so that the driver and passenger are protected from the impact upon the collision.

By the way, in the first conventional air bag apparatus, the air bag is expanded out upon the collision of the automobile irrespective of the existence or non-existence of the passenger on the passenger seat. For example, when the passenger of an adult is present on the passenger seat, the protection effect of the passenger can be expected on the collision as mentioned above. However, when the passenger is a child, the sitting height is lower in the child than the adult so that the head position of the child is low than in the adult. Therefore, the influence of the expansion of the air bag to the child is worried about. Thus, when the passenger is the child, it is sometimes desirable that the air bag is not expanded even if the automobile collides.

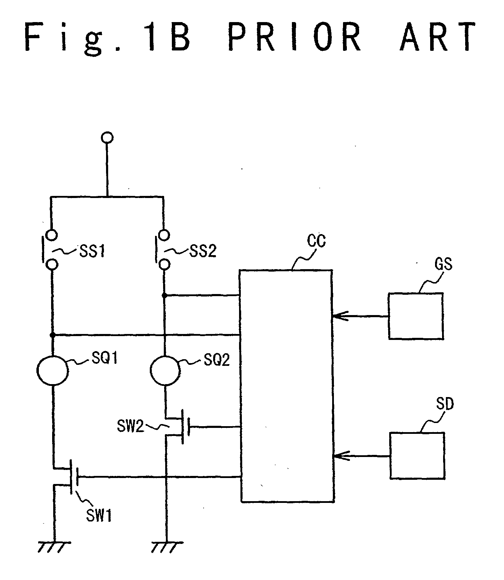

Therefore, a second conventional air bag apparatus as shown in Fig. 1B is proposed to cope with such a problem, for example. In the air bag apparatus, a sensor SD is further provided to detect whether or not a passenger is present on a passenger seat. The control circuit CC determines the existence or non-existence of the passenger on the passenger seat in accordance with a detection signal of the sensor SD, and selectively sets the air bag to either of the expansion allowable state or the expansion inhibited state in accordance with the determining result.

Especially, a passenger detecting system using a weight sensor as the sensor SD is proposed in which the determination of whether the passenger is an adult or a child is performed in accordance with the weight of the passenger which is measured by the weight sensor. Also, a passenger detecting system is proposed in which the passenger on the passenger seat is picked up by a camera and the determination of whether the passenger is the adult or the child is performed through image processing.

According to the former system, the rough determination of whether the passenger is the adult or the child is possible. The air bag is set to either of the expansion allowable state or the expansion inhibited state in accordance with the determination result. Thus, the unexpected situation in the collision of the automobile can be avoided. However, there is a problem in lack of accuracy, because the difference between individuals in weight is large and a child can be sometimes heavier in weight than an adult.

Also, according to the latter system, the determination of the existence or non-existence of the passenger on the seat, and the determination of whether the passenger is the adult or the child can be quite correctly performed. However, there is a problem that a processor becomes complicated and expensive, because an imaging data picked up by the camera needs to be subjected to a kind of image processing and a comparing process with various image patterns.

In conjunction with the above, as the passenger detecting system to detect the existence or non-existence of the passenger on the passenger seat are proposed various systems. In Japanese Laid Open Patent Application (JP-A-Heisei 4-46843), Japanese Laid Open Utility Model Application (JP-U-Heisei 3-52266), Japanese Laid Open Patent Application (JP-A-Showa 61-113527), a passenger detecting system in which a weight sensor is incorporated inside the seat is disclosed. Also, in Japanese Laid Open Patent Application (JP-A-Heisei 9-509118), a passenger detecting system in which electrodes are arranged in a seat section and a back supporting section of a seat and an oscillation circuit is connected between the electrodes or between the electrode and the chassis of a vehicle.

A passenger detecting system according to the preamble of claim 1 is disclosed in WO 97/31238A1.

### Summary of the Invention

Therefore, an object of the present invention is to provide a passenger detecting system in which the existence or non-existence of a passenger on a seat can be accurately detected irrespective of an ambient temperature.

Another object of the present invention is to provide a passenger detecting system in which the existence or non-existence of a passenger on a passenger seat can be accurately detected without influence by the attitude of the passenger.

Still another object of the present invention is to provide an air bag apparatus which includes the passenger detecting system and an air bag can be controlled in accordance with the detecting result.

An aspect of the present invention is achieved by a passenger detecting system according to the features of claim 1. In particular the passenger detecting system includes an antenna electrode, a signal generating circuit, a detecting circuit, and a control circuit. The antenna electrode is provided in a seat to be occupied by a passenger. The signal generating circuit generates and supplies a supply signal to the antenna electrode through a resistance such that an electric field is generated around the antenna electrode. The detecting circuit has the resistance, and detects a direct current data signal from a line voltage associated with a voltage drop by the resistance, wherein the line voltage changes depending upon an object on the seat. The control circuit determines from the detected direct current data signal, whether or not a passenger is present on the seat and whether the passenger is an adult or a child.

The passenger detecting system further includes a plurality of the antenna electrodes; and a switching circuit provided between the resistance and the plurality of antenna electrodes, and selectively supplying the supply signal to one of the plurality of antenna electrodes in response to a switching control signal from the control circuit

The passenger detecting system may further includes an amplitude control circuit detecting an amplitude of the supply signal and adjusting the amplitude to a predetermined value based on the detected amplitude. The supply signal may be an alternate current signal having a frequency of about 120 KHz and a voltage in a range of 5 to 12 V.

The detecting circuit may include a converter converting the line voltage of alternate current into a direct current signal. In this case, the detecting circuit further includes an impedance converting circuit provided between the resistor and the converter and having a high impedance on an input side and a low impedance on an output side.

The detecting circuit may include a rectifier rectifying the line voltage of alternate current into a direct current signal in full wave, and a smoothing circuit producing the direct current data signal from the direct current signal.

Also, the detecting circuit may include a rectifier rectifying the line voltage of alternate current into a direct current signal in half wave, and a smoothing circuit producing the direct current data signal from the direct current signal. In this case, the rectifier includes an operation amplifier having an inversion terminal connected to a predetermined voltage and a non-inversion terminal connected to the line voltage.

The passenger detecting system may further include a buffer circuit provided between the resistance and the antenna electrode and having a high impedance on an input side and a low impedance on an output side.

When the signal generating circuit supplies the direct current supply signal, the detecting circuit may include a switching element connected between the resistance and a ground level and switching between an on state and an off state in response to a control signal from the control signal such that a pulse signal is supplied to the antenna electrode.

Instead, the passenger detecting system may further include a plurality of the antenna electrodes, a plurality of circuit sets respectively provided for the plurality of antenna electrodes, each of the circuit sets including the signal generating circuit and the detecting circuit, and a switching circuit provided between the control circuit and the plurality of circuit sets, and selectively supplying the control signal to one of the plurality of circuit sets in response to a switching control signal from the control circuit.

The control circuit
produces signal data from the detected direct current data signals corresponding to the plurality of antenna electrodes,
calculates a summation of the signal data, and
determined based on the summation of the signal data, whether or not the passenger is present on the seat.

Instead, the control circuit produces signal data from the detected direct current data signals corresponding to the plurality of antenna electrodes, calculates a summation of the signal data, determines based on the summation of the signal data, whether or not the passenger is present on the seat, normalizes each of the signal data based on a maximum one of the signal data, calculates a summation of the normalized signal data, and determines based on the summation of the normalized signal data, whether the passenger is the adult or the child. In this case, the control circuit further calculates a gravity of the normalized signal data, and determines based on the summation of the normalized signal data and the calculated gravity, whether the passenger is the adult or the child.

In order to achieve another aspect of the present invention, an air bag apparatus includes a passenger detecting system according to the first aspect of the invention and an air bag control system. The passenger detecting system includes an antenna electrode, a signal generating circuit, a detecting circuit and a control circuit. The antenna electrode is provided in a seat to be occupied by a passenger. The signal generating circuit generates and supplies a supply signal to the antenna electrode through a resistance such that an electric field is generated around the antenna electrode. The detecting circuit has the resistance, and detects a direct current data signal from a line voltage associated with a voltage drop by the resistance, wherein the line voltage changes depending upon an object on the seat. The control circuit determines from the detected direct current data signal, whether or not a passenger is present on the seat and whether the passenger is an adult or a child. The air bag control system is connected to the control circuit and sets an air bag to either of an expansion allowed state and an expansion inhibited state based on the determination result by the control circuit.

The air bag apparatus may further include an amplitude control circuit detecting an amplitude of the supply signal and adjusting the amplitude to a predetermined value based on the detected amplitude. Also, the supply signal may be an alternate current signal having a frequency of about 120 KHz and a voltage in a range of 5 to 12 V.

The detecting circuit may includes a converter converting the line voltage of alternate current into a direct current signal. The detecting circuit may further include an impedance converting circuit provided between the resistor and the converter and having a high impedance on an input side and a low impedance on an output side. Further, the detecting circuit may include a rectifier rectifying the line voltage of alternate current into a direct current signal in full wave, and a smoothing circuit producing the direct current data signal from the direct current signal. Instead, the detecting circuit may include a rectifier rectifying the line voltage of alternate current into a direct current signal in half wave, and a smoothing circuit producing the direct current data signal from the direct current signal. In this case, the rectifier includes an operation amplifier having an inversion terminal connected to a predetermined voltage and a non-inversion terminal connected to the line voltage.

The air bag apparatus may further include a buffer circuit provided between the resistance and the antenna electrode and having a high impedance on an input side and a low impedance on an output side.

When the signal generating circuit supplies the supply signal of a direct current, the detecting circuit includes a switching element connected between the resistance and a ground level and switching between an on state and an off state in response to a control signal from the control signal such that a pulse signal is supplied to the antenna electrode.

The air bag apparatus further includes a plurality of the antenna electrodes, and a switching circuit provided between the resistance and the plurality of antenna electrodes, and selectively supplying the supply signal to one of the plurality of antenna electrodes in response to a switching control signal from the control circuit.

Instead, the air bag apparatus further includes a plurality of the antenna electrodes, a plurality of circuit sets respectively provided for the plurality of antenna electrodes, each of the circuit sets including the signal generating circuit and the detecting circuit, and a switching circuit provided between the control circuit and the plurality of circuit sets, and selectively supplying the control signal to one of the plurality of circuit sets in response to a switching control signal from the control circuit. In this case, the control circuit produces signal data from the detected direct current data signals corresponding to the plurality of antenna electrodes, calculates a summation of the signal data, and determined based on the summation of the signal data, whether or not the passenger is present on the seat.

Instead, the control circuit produces signal data from the detected direct current data signals corresponding to the plurality of antenna electrodes, calculates a summation of the signal data, determines based on the summation of the signal data, whether or not the passenger is present on the seat, normalizes each of the signal data based on a maximum one of the signal data, calculates a summation of the normalized signal data, and determines based on the summation of the normalized signal data, whether the passenger is the adult or the child. In this case, the control circuit may further calculate a gravity of the normalized signal data, and determines based on the summation of the normalized signal data and the calculated gravity, whether the passenger is the adult or the child.

### Brief Description of the Drawings

Fig. 1A is a circuit block diagram of a first conventional air bag apparatus;
Fig. 1B is a circuit block diagram of a second conventional air bag apparatus;
Fig. 2A is a diagram illustrating an electric field distribution around an antenna electrode;
Fig. 2B is a diagram illustrating the electric field distribution when an object exists in the neighborhood of the antenna electrode;
Fig. 3A is a side view of a seat illustrating the arrangement of antenna electrodes;
Fig. 3B is a front view of the seat;
Fig. 4A is a plan view of an antenna electrode section;
Fig. 4B is a cross sectional side view of the antenna electrode section;
Fig. 5 is a circuit block diagram of a passenger detecting system according to a first embodiment of the present invention;
Fig. 6 is a circuit block diagram of an air bag control system of an air bag apparatus according to the first embodiment of the present invention;
Fig. 7A is a state when a child is present on the seat;
Fig. 7B is a signal data pattern relating to current flowing through each antenna electrode in the state shown in Fig. 7A;
Fig. 7C is a diagram illustrating a distribution pattern of normalized data;
Fig. 7D is a diagram illustrating a modification of the distribution pattern of normalized data;
Fig. 8A is a state when an adult is present on the seat;
Fig. 8B is a signal data pattern relating to current flowing through each antenna electrode in the state shown in Fig. 8A;
Fig. 8C is a diagram illustrating a distribution pattern of normalized data;
Fig. 9 is a flow chart of a passenger detecting process in the passenger detecting system according to the first embodiment of the present invention;
Fig. 10 is a flow chart of an initial diagnosing process of the passenger detecting process shown in Fig. 9;
Fig. 11 is a flow chart of a signal receiving process of the passenger detecting process shown in Fig. 9;
Fig. 12 is a flow chart of the passenger judging process of the passenger detecting process shown in Fig. 9;
Fig. 13 is a flow chart of an SRS communication process of the passenger detecting process shown in Fig. 9;
Fig. 14 is a circuit block diagram illustrating a second embodiment of the passenger detecting system according to the present invention;
Fig. 15A is a side view of an antenna electrode section in a third embodiment of the present invention;
Fig. 15B is a plan view of an antenna electrode section in the third embodiment of the present invention;
Fig. 16 is a block diagram illustrating the passenger detecting system according to the third embodiment of the present invention;
Figs. 17A and 17B are diagrams illustrating the states of the passenger of an adult on the seat and of the passenger of a child;
Fig. 18 is a circuit diagram illustrating a current detecting section of the passenger detecting system according to the third embodiment of the present invention;
Figs. 19A to 19C are waveform diagrams of a line voltage, the output voltage of a full wave rectifying circuit, and the output voltage of a smoothing circuit;
Fig. 20 is a circuit diagram illustrating an interface circuit of the passenger detecting system according to the second embodiment of the present invention;
Figs. 21A to 21D are timing charts illustrating a gate signal outputted from the control circuit, a high frequency low voltage signal at the time of the empty state and preset state on the seat, and a direct current output of an AC-DC converting circuit;
Fig. 22 is a circuit diagram showing the passenger detecting system according to the fourth embodiment of the present invention;
Figs. 23A to 23C are waveform diagrams of a line voltage, the output voltage of a half wave rectifying circuit, and the output voltage of a smoothing circuit;
Fig. 24 is a circuit block diagram illustrating the passenger detecting system according to a fifth embodiment of the present invention; and
Fig. 25 is a circuit diagram showing the passenger detecting system according to sixth embodiment of the present invention.

### Description of the Preferred Embodiments

Next, an air bag apparatus with a passenger detecting system of the present invention will be described below in detail with reference to the attached drawings. It should be noted that there is filed a copending US patent application No. , by Takashi SAITO, Kenji KUMAGAI, Kazunori JINNO, Satoshi BABA, Masahiro OFUJI, Tsutomu FUKUI, Nobuhiro KOYOTA, Takashi INOU, Kazutomo ISONAGA and Makoto NAGAI (NEC CORPORATION AND HONDA GIKEN KOGYO KABUSIKI KAISYA), entitled "PASSENGER DETECTING SYSTEM AND AIR BAG SYSTEM USING THE SAME", and in accordance with Japanese patent applications No. 197669/1998, 197670/1998, 197671/1998 and 245893/1998. Satoshi BABA is one of the inventors of this patent application.

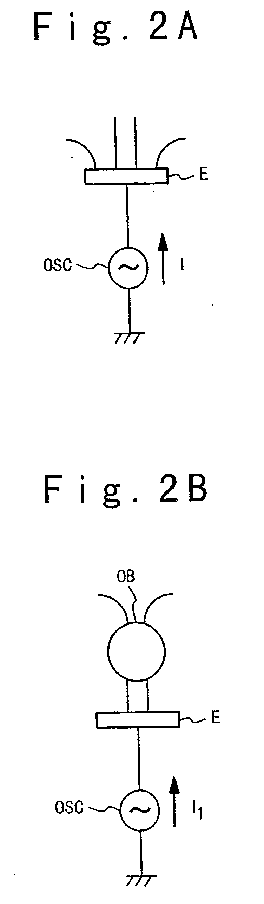

Figs. 2A and 2B are diagrams illustrating the principle of the present invention. Referring to Figs. 2A and 2B, the principle of the present invention will be described.

A passenger detecting system basically utilizes the distortion of a weak electric field which is generated around an antenna electrode which is arranged in a seat. As shown in Fig. 2A, when a high frequency low voltage signal is applied from an oscillating circuit OSC to the antenna electrode E, the weak electric field is generated around the antenna electrode E. As a result, a displacement current I flows through the antenna electrode E. In this state, as shown in Fig. 2B, when an object OB approaches the neighborhood of the antenna electrode E, the electric field is distorted so that a displacement current I1 flows through the antenna electrode E. The displacement current I1 is different from the current I.

In this manner, the displacement current which flows through the antenna electrode E changes depending upon the existence or non-existence of the object OB on the seat. By using this phenomenon, the existence or non-existence of a passenger on the seat can be detected. Also, whether the passenger on the seat is an adult or a child can be detected. Especially, if the number of antenna electrodes is increased, it is possible to obtain a lot of data of the object or passenger on the seat, so that the existence or non-existence of the passenger on the seat can be more accurately detected.

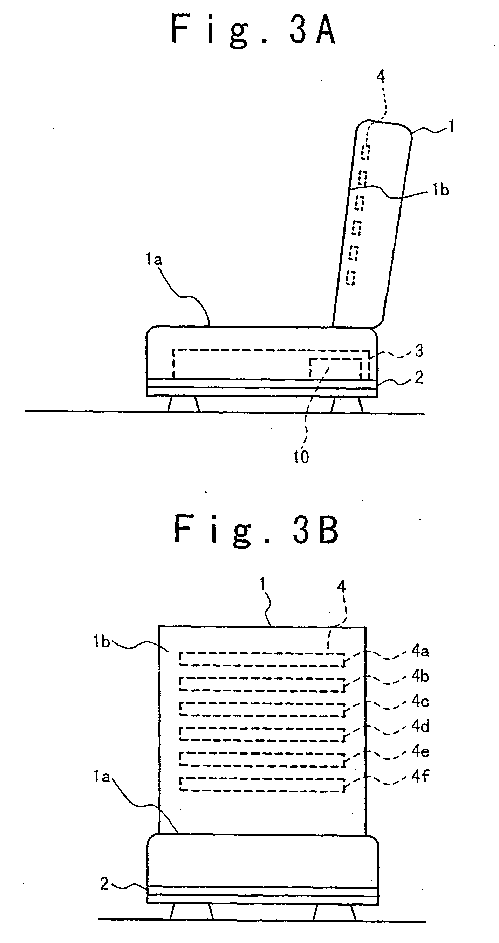

Next, the air bag apparatus with the passenger detecting system according to the first embodiment of the present invention which uses this principle will be described with reference to Figs. 3A and 3B, Figs. 4A and 4B, Fig. 5 and Fig. 6.

Figs. 3A and 3B show a passenger seat (or a driver seat) according to the present invention. The seat 1 is mainly composed of a seat section 1a and a back supporting section 1b. For example, the seat section 1a is composed of a base 2 slidable in front and back directions, a seat frame 3 fixed on the base 2, a cushion material arranged on the seat frame 3 and an exterior material covering the cushion material. The back supporting section 1b is composed of a cushion material arranged on the front side of the seat frame and an exterior material covering the cushion material.

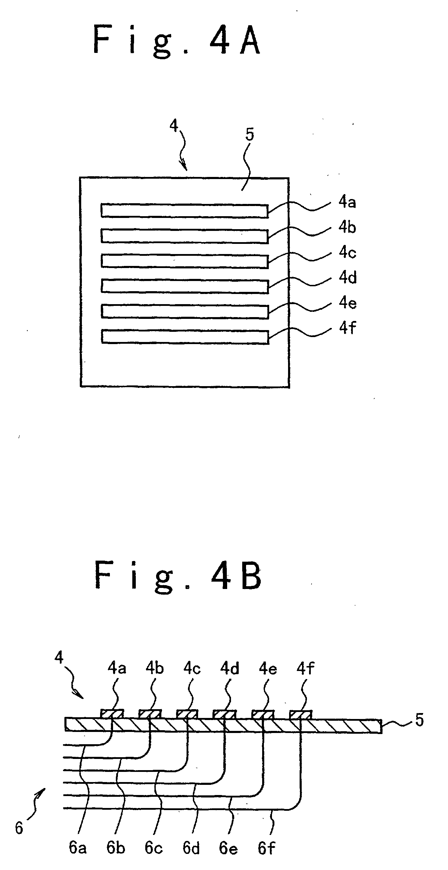

As shown in Figs. 3B, 4A and 4B, an antenna electrode section 4 is arranged in the back supporting section 1b. The antenna electrode section 4 is composed of a plurality of band-shaped antenna electrodes 4a to 4f and a base member 5. That is, the plurality of band-shaped antenna electrodes 4a to 4f are arranged to extend on the base member 5 in a horizontal width direction of the back supporting section 1b apart from each other in a vertical direction. It should be noted that the antenna electrode section 4 may be provided inside the exterior material or outside the exterior material. Also, the antenna electrode section 4 may be incorporated in the exterior material. Also, a control unit 10 to be described later is arranged on the seat frame 3 or in the neighborhood of the seat frame 3, as shown in Fig. 3A.

In this embodiment, the plurality of antenna electrodes 4a to 4f are composed of conductive clothe. However, the antenna electrodes 4a to 4f may be woven in a seat cloth of the back supporting section 1b as a thread metal, or may be fabricated by coating a conductive paint or by arranging metal plates.

As shown in Fig. 4A, the antenna electrodes have a band shape with an identical size and are arranged on one of the surfaces of the base member 5 which is composed of an insulating member. The antenna electrode section 4 is arranged inside the exterior material. Lead lines 6 (6a to 6f) are independently connected to the antenna electrodes 4a to 4f, respectively. The lead lines 6 are connected with connectors or terminals 19 (19a to 19f) of the control unit 10.

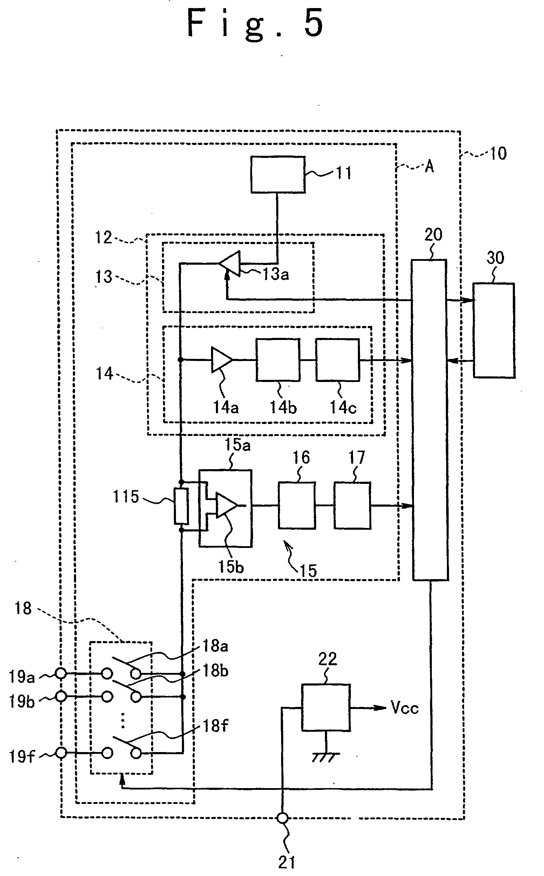

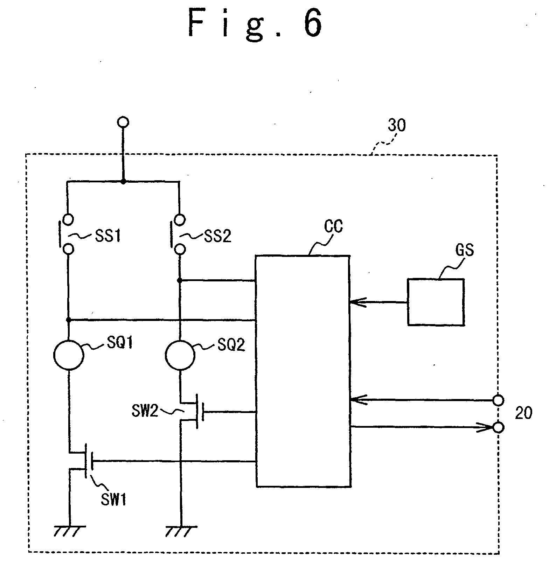

As shown in Fig. 5, the control unit 10 is composed of an interface circuit A, the connectors 19 (19a to 19f), a control circuit 20 and a power supply circuit 22. The control circuit 20 is composed of a CPU and an external memory. A connector 21 is arranged in the housing of the control unit 10, and connected to a battery power source (not shown). The power supply circuit 22 is connected to the connector 21 and supplies a suitable Vcc power supply required by the interface circuit A and the control circuit 20. An air bag control system 30 having the structure shown in Fig. 6 is connected to the control circuit 20 of the control unit 10. Thus, an air bag apparatus of the present invention is fabricated.

In the control unit 10, the interface circuit A is composed of an oscillating circuit 11, an amplitude control circuit 12, a current detecting circuit 15, and a switching circuit 18 having a plurality of switches 18a to 18f.

The oscillating circuit 11 generates a high frequency low voltage signal by which an electric field is generated around the antenna electrodes 4a to 4f. The high frequency low voltage signal has the amplitude of about 5 to 12 V and the frequency of about 120 KHz. The amplitude control circuit 12 controls the voltage amplitude of the high frequency low voltage signal outputted from the oscillating circuit 11 to have a substantially constant value.

In the interface circuit A, the amplitude control circuit 12 is composed of an amplitude adjusting circuit 13 which variably changes the voltage amplitude of the high frequency low voltage signal, and an amplitude detecting circuit 14 which detects the voltage amplitude of the high frequency low voltage signal.

For example, the amplitude adjusting circuit 13 is composed of an amplitude variable section 13a composed of a programmable gain amplifier (PGA) and operating in response to an amplitude control signal. Also, the amplitude detecting circuit 14 is composed of a detecting section 14a, an AC-DC converting circuit 14b and an amplifier 14c. The detecting section 14a is composed of an operational amplifier to detect the voltage amplitude. The AC-DC converting circuit 14b converts an output signal of the detecting section 14a into a direct current (DC) signal. The amplifier 14c amplifies an output signal of the AC-DC converting circuit 14b to output to the control circuit 20 as an amplitude detection signal. It should be noted that an amplitude control signal is outputted from the control circuit 20 to the amplitude change section 13a.

The current detecting circuit 15 is composed of a resistance 115 as an impedance element, a detecting circuit 15a including an amplifier 15b, an AC-DC converting circuit 16 and an amplifier 17. The resistance 115 is connected with the amplitude control circuit 12 in series. Also, the output side of the resistance 15a of the current detecting circuit 15 is connected with the connectors 19a to 19f through the switches 18a to 18f of the switching circuit 18. The amplifier 15b of the detecting circuit 15a is a differential amplifier which amplifies a voltage between terminals of the resistance 15a to detects a current of the high frequency low voltage signal to output a detection signal. The AC-DC converting circuit 16 converts the detection signal from the detecting circuit 15a into a direct current signal. The amplifier 17 amplifies the direct current signal supplied from the AC-DC converting circuit 16 to output to the control circuit 20 as a current detection signal. The switching circuit 18 for the antenna electrodes 4a to 4f is connected between the current detecting circuit 15 on the one side and the connectors 19a to 19f on the other side, and has a plurality of switches 18 (18a to 18f). It should be noted that the selective switching between the switches 18a to 18f of the switching circuit 18 is performed in accordance with a switching control signal from the control circuit 20.

The passenger detecting system formed in this way operates as follows.

First, when the high frequency low voltage signal is transmitted from the oscillating circuit 11, the voltage amplitude of the high frequency low voltage signal is detected by the detecting section 14a of the amplitude detecting circuit 14. A detection signal from the detecting section 14a is converted into the direct current signal by the AC-DC converting circuit 14b, and is amplified by the amplifier 14c and then is supplied to the control circuit 20 as the amplitude detection signal. The control circuit 20 determines whether or not the detected voltage amplitude is set to the predetermined amplitude value. Then, the control circuit 20 outputs the amplitude control signal to the amplitude changing section 13a such that the voltage amplitude is corrected or adjusted to the predetermined amplitude value. By this, the amplitude value of the high frequency low voltage signal is corrected to the predetermined amplitude value. Thereafter, through the cooperation operation of amplitude variable circuit 13 and the amplitude detecting circuit 14, the amplitude value of the high frequency low voltage signal is controlled to the constant amplitude value.

The high frequency low voltage signal having the predetermined amplitude value is supplied to the antenna electrodes 4a to 4f through the current detecting circuit 15, the switching circuit 18, and the connectors 19a to 19f. As a result, the weak electric field is generated around the antenna electrode. At this time, the switches 18a to 18f of the switching circuit 18 performs the control of the opening and closing operation in response to a switching control signal from the control circuit 20.

More specifically, first, only the switch 18a is closed, and next only the switch 18b is closed. In this manner, a specific one of the switches 18a to 18f) is closed. At the same time, the switching control is performed such that the remaining switches other than the closed switch are opened. Therefore, when a specific one of the switches 18a to 18f is closed, the high frequency low voltage signal is supplied to one of the antenna electrodes 4a to 4f corresponding to the specific switch. As a result, the weak electric field is generated around the corresponding one of the antenna electrodes 4a to 4f, and the current flows with a level determined in accordance with the situation of the passenger on the passenger seat 1. That is, the current flows in accordance with a contact area with body portions of the passenger such as the back, the shoulder, the neck, and the head. This current is detected by the current detecting circuit 15, is converted into the direct current signal by the AC-DC converting circuit 16, and is amplified by the amplifier 17 and then is supplied to the control circuit 20 as signal data one after another.

The control circuit 20 is composed of a storage section, a memory section, a calculating section and a determining section. The storage section stores the signal data outputted from the interface circuit A. The calculating section adds the signal data from the current detecting circuit 15. Also, the calculating section performs a normalizing process to the signal data in accordance with a maximum one of the signal data, and a summing process and a gravity calculating process. Threshold values are previously stored in the memory section. Especially, in the memory section are previously stored a the threshold value THe used to determine whether or not the passenger seat is empty, and first and second threshold values TH1 and TH2 used to determine whether the passenger is an adult or a child, at least. The determining section compares the calculated data from the calculating section and the threshold values read out from the memory section to determine whether the passenger is an adult or a child.

The threshold data THe is set in accordance with the summation S because the summation S of signal data outputted from the interface circuit A relates to the current flowing through the antenna electrode when the child or adult as a passenger sits on the seat. The threshold data THe is specifically set to "20". A passenger is determined to exist on the seat 1 if the summation S is equal to or larger than "20" and it is determined that any passenger does not exist on the seat 1 if the summation S is smaller than "20".

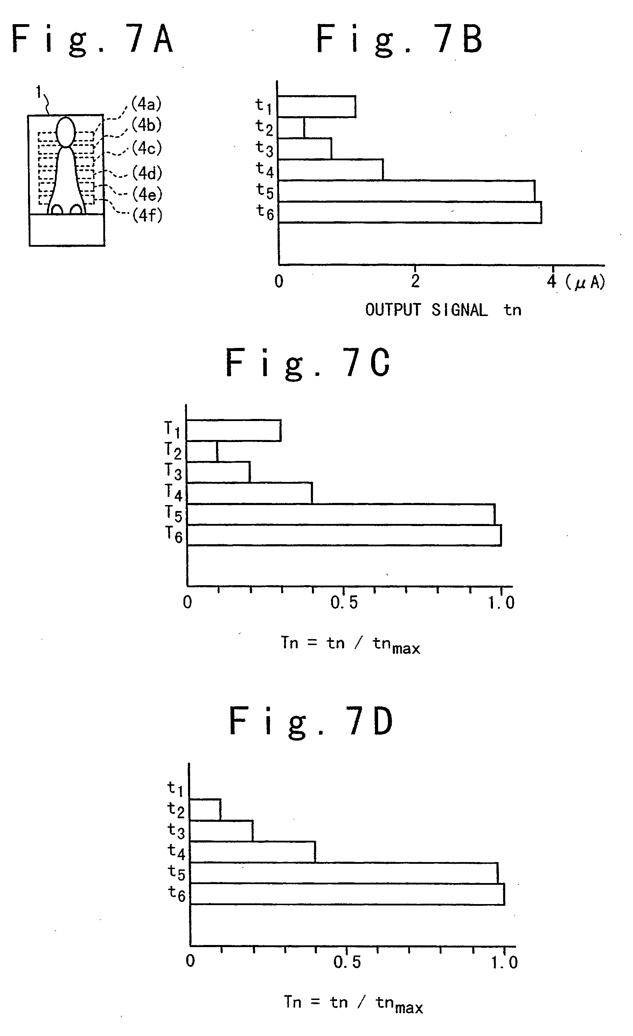

The levels of the current flowing through the antenna electrodes 4a to 4f are different from each other in accordance with the contact areas between the antenna electrodes in the seat and the body portions of the passenger such as the head, the neck, the shoulder and the back. Also, the patterns of current levels are different between a child and an adult. Therefore, the threshold data TH1 used to distinguish the passenger is set in accordance with the above facts. That is, as shown in Figs. 7A and 7B, in case of the passenger of the child, the current levels corresponding to the body portions of the passenger such as the shoulder or a portion lower than the shoulder takes the higher values in order. The current level for the antenna electrode 4a corresponding to the head of the passenger takes the higher value, and the current level for the antenna electrode 4b corresponding to the neck of the passenger takes the lowest value.

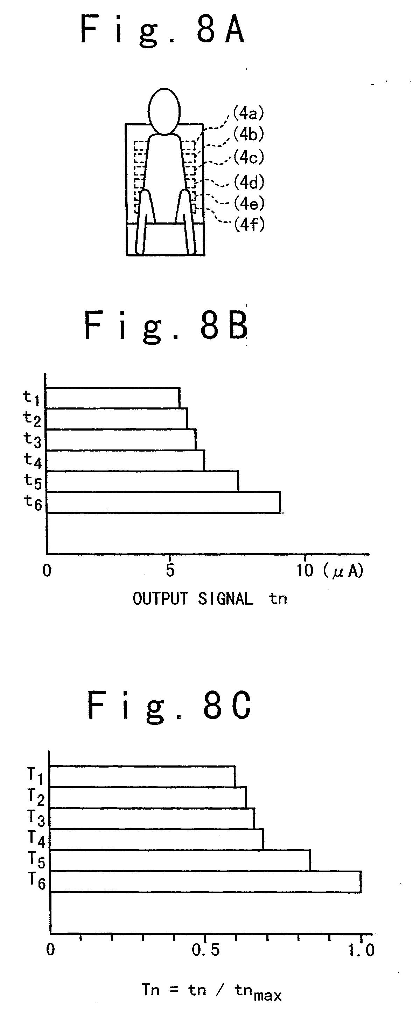

On the other hand, as shown in Figs. 8A and 8B, in case of the passenger of an adult, there is no antenna electrode corresponding to the head of the passenger. Also, the current levels for the antenna electrodes 4a to 4f corresponding to the body portions of the passenger such as the shoulder of the passenger or a portion lower than the shoulder become higher in order.

The current which flows through the antenna electrode is influenced depending upon the thickness of a wear of the passenger and the attitude of the passenger. In order to eliminate the influence, the respective signal data relating to the levels of the current flowing through the antenna electrodes are normalized in accordance with the maximum one of the respective signal data, as shown in Fig. 7C and Fig. 8B. The summation ST of the normalized data changes depending upon an existing situation of the passenger. Therefore, the first threshold data TH1 is determined as a value between the summations ST of the normalized data for the adult and for the child. Thus, the passenger is determined to be the adult when an actual summation ST is higher than the first threshold value TH1 and the passenger is determined to be the child when the actual summation ST is lower than the first threshold value TH1.

As shown in Fig. 7D and Fig. 8C, a pattern of current levels flowing through the plurality of antenna electrodes is different between the adult and the child, and there is a significant difference in gravity P between the adult and the child. The second threshold value TH2 used to distinguish the passenger is determined in accordance with the gravity P. It should be noted that the gravity P is calculated from the equation of (P=X/Y ) using the normalized data Tn, where X= 1xT1 + 2xT2 + ... + (n-1)xTn-1 + nxTn and Y = T1 + T2 + ... +Tn-1 + Tn. Therefore, the passenger is determined to be the adult when an actual gravity P is larger than the second threshold value TH2, i.e., when the gravity P is positioned at a point close to the back of the passenger. Also, the passenger is determined to be the child when the actual gravity P is smaller than the second threshold value TH2, i.e., when the gravity P is positioned at a point apart from the back of the passenger. According to the normalized data shown in Figs. 7A to 8C, the data of the gravity P is 3.9 in case of the adult and is 5.0 in case of the child. Therefore, the second threshold value Th2 is set to about 4.4. It should be noted that the head data may be previously removed in the determining process as shown in Fig. 7D. This is because the head position is unstable when the child is present on the seat. With the first threshold value TH1, the same may be applied.

In this manner, the actual signal data relating to the levels of the current flowing through the plurality of antenna electrodes 4a to 4f are taken into the control circuit 20 and are subjected to various calculating processes. For example, the summation S of the signal data tn is compared with the threshold data THe, and it is determined whether or not the seat 1 is empty. Also, each signal data tn is normalized in accordance with the maximum one tnmax of the signal data tn. In Fig. 7V, the maximum signal data is t6. The summation ST of the normalized data Tn is compared with the first threshold data TH1 to determine whether the passenger is an adult or a child. Moreover, the gravity P of normalized data is calculated from the equation of P=X/Y mentioned above and is compared with the second threshold value TH2. The air bag control system 30 shown in Fig. 6 is set to either of the expansion allowed state or the expansion inhibited state in response to an expansion control signal from the control circuit 20 which is determined in accordance with these determinations. That is, the expansion control signal is supplied from the control circuit 20 to the control circuit CC of the air bag control system 30. The control circuit CC controls such that a gate control signal is not supplied to the gate of the semiconductor switching element SW2 on the side of the passenger seat, when it is determined that the passenger is a child. Also, the control circuit CC controls such that the gate control signal is supplied to the gate of the semiconductor switching element SW2 on the side of the passenger seat, when the passenger is an adult. Therefore, the air bag on the side of the passenger seat is not expanded in case that the passenger is the child, and is expanded in case that the passenger is the adult. It should be noted that the air bag on the side of the driver seat is expanded irrespective of the situation on the side of the passenger seat.

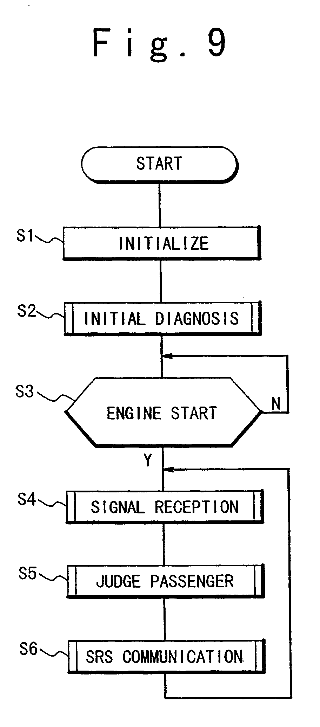

Next, the processing flow of this passenger detecting system will be described with reference to Fig. 9 to Fig. 13.

First, as shown in Fig. 9, an ignition switch is turned on and is started. An initializing process is performed in a step S1 and the control advances to a step S2. In the step S2, an initial checking or diagnosing process is performed to a communication system between the control circuit 20 and the air bag control system 30. Whether or not an engine is started is determined in a step S3. When the engine has been started, the control advances to a step S4. When the engine is determined not to have been started, the control executes the step S3 again. In the step S4, a signal data relating to the level of the current flowing in accordance with the weak electric field is selectively received by the control circuit 20 through the interface circuit A. The weak electric field is selectively generated in the neighborhood of each of the plurality of antenna electrodes 4a to 4f. In a step S5, the taken-in data are subjected to a calculating process and the determination of whether a passenger exists on the passenger seat, and the determination of whether the passenger is a child or an adult are performed in accordance with the calculated data result. Moreover, in a step S6, an SRS communication is performed between the air bag control system (SRS) 30 and the control circuit 20 in accordance with the determination results in the step S5. When the step S6 ends, the control returns to the step S4 again, and the processes from the step S4 to the step S6 are repeatedly performed. It should be noted that the step S3 can be omitted.

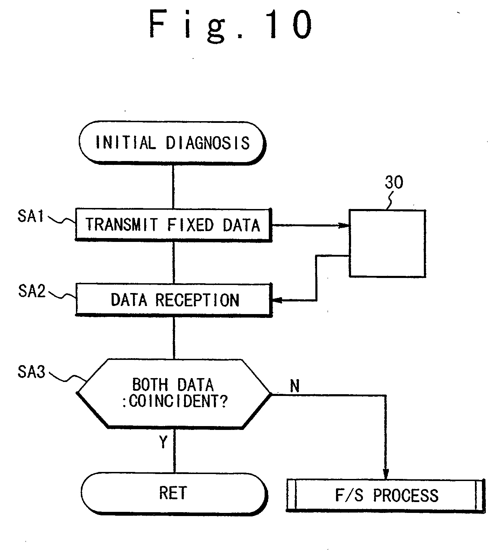

For example, the initial diagnosing process shown in Fig. 9 is performed to be shown in Fig. 10. First, in a step SA1, a predetermined data is transmitted from the control circuit 20 to the control circuit CC of the air bag control system 30. In a step SA2, a data transmitted from the air bag control system 30 is received. In a step SA3, it is determined whether the predetermined data which has been transmitted from the control circuit 20 to the air bag control system 30 and the data received from the air bag control system 30 are coincident with each other. When both of the data are determined to be coincident with each other, the control is continued. When both of the data are determined not to be coincident with each other, it is determined to be any error in the communication system and a fail safe processing is performed. For example, a warning light and so on are lit up.

It should be noted that this initial diagnosing process may be performed by transmitting the predetermined data from the air bag control system 30 to the control circuit 20. In this case, the received data is transmitted from the control circuit 20 back to the air bag control system 30. Then, the control circuit CC of the air bag control system 30 determines whether or not the data received from the control circuit 20 is coincident with the predetermined data.

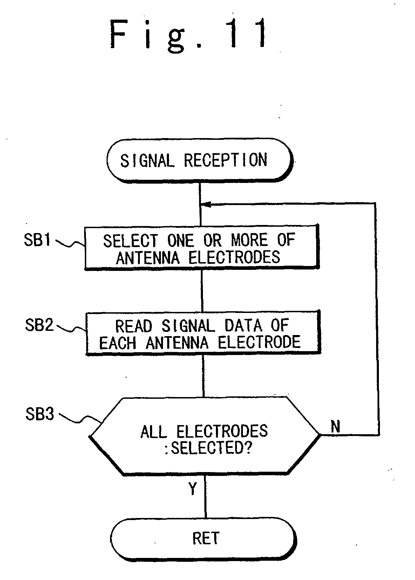

For example, the signal receiving process in the step S4 of Fig. 9 is performed as shown in Fig. 11. First, in a step SB1, the switches 18a to 18f of the switching circuit 18 are selectively closed in order one by one in accordance with the switching control signal from the control circuit 20 such that the antenna electrodes 4a to 4f are sequentially selected. In a step SB2, the signal data t1 to t6 relating to the levels of the current flowing through the respective antenna electrodes 4a to 4f are taken in by the control circuit 20. Then, the control advances to a step SB3.

In the step SB3, whether or not all the antenna electrodes 4a to 4f are connected in order is determined in accordance with the selectively closing operation of the switches 18a to 18f of the switching circuit 18. When all the switches are determined to have ended, the control is continued to the passenger determining process. When all the switches are determined not to have ended, the control returns to the step SB1.

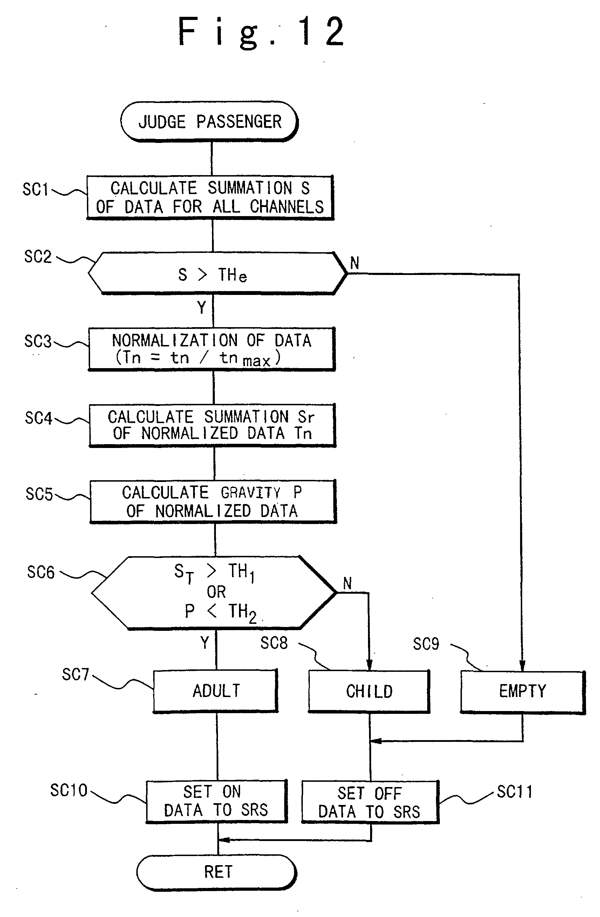

The passenger determining process shown in Fig. 9 is performed as shown in Fig. 12. First, in a step SC1, there is calculated the summation S of the signal data tn (n = 1 to k). In this case, a summation of six signal data t1 to t6 for the antenna electrodes 4a to 4f is calculated. In a step SC2, the summation S is compared with the threshold data THe to distinguish whether or not the summation S is larger than the threshold data THe, i.e., whether or not the seat is empty. When the summation S is determined to be larger than the threshold data THe, the control advances to a step SC3. When the summation S is determined to be not large, the control advances to a step SC15.

In the step SC3, the signal data tn (= t1 to t6) are respectively normalized in accordance with the maximum data tnmax (t6 is maximum in the figure), i.e., (Tn = tn/tnmax). Then, the control advances to a step SC4. In the step SC4, the summation ST of normalized data Tn is calculated. In a step SC5, the gravity P is calculated from the equation of (P = X/Y) using the normalized data Tn, and then the control advances to a step SC6.

In the step SC6, whether or not the summation ST is equal to or larger than the threshold value TH2 and/or whether or not the gravity P is equal to or lager than the first threshold value TH1 are determined. The control advances to a step SC7 when it is determined that the summation ST is equal to or larger than the threshold value TH2 or the gravity P is equal to or lager than the first threshold value TH1. On the other hand, the control advances to a step SC8 when it is determined that the summation ST is smaller than the threshold value TH2 or the gravity P is smaller than the first threshold value TH1. In the step SC7, the passenger is determined to be an adult, in accordance with the determination result in the step SC6. When the passenger is determined to be the adult in the step 6, an ON data is set in a step SC10 for the expansion of the air bag of the air bag control system 30. Then, the SRS data communication flow is continued. When the passenger is determined to be a child in the step SC8, an OFF data is set in the step SC16 such that the air bag of the air bag control system 30 is not expanded, and the control is continued to the processing flow. It should be noted that when the summation S of the signal data is not equal to or larger then the threshold value THe, the seat is determined to be empty in the step SC9 and the control advances to the step SC11. However, the control may advance to the step SC10.

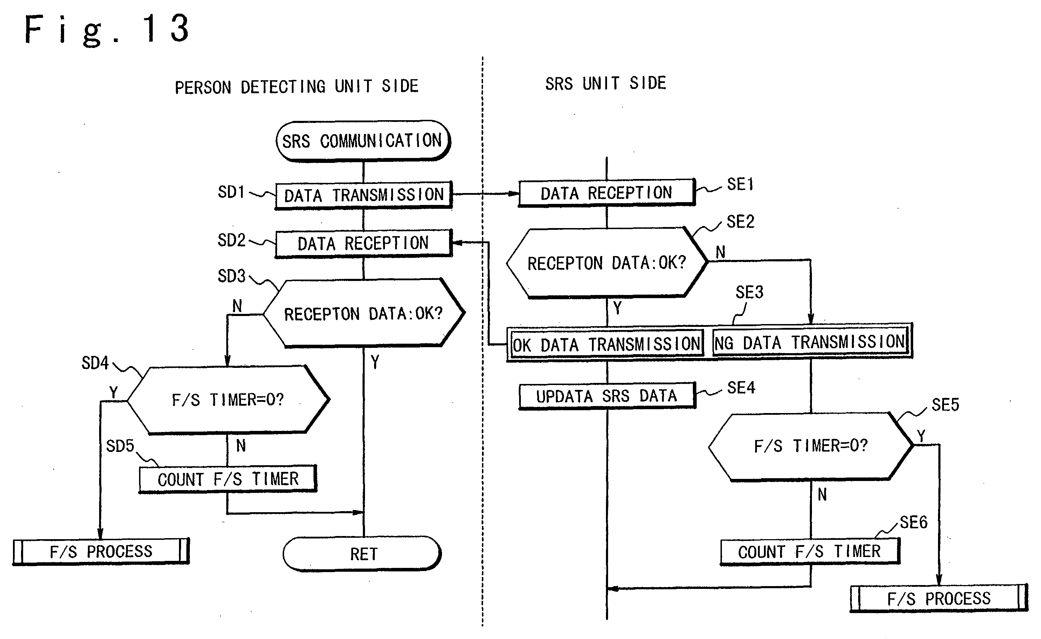

The SRS data communication in Fig. 9 is performed as shown in Fig. 13. First, in a step SD1, the ON data or OFF data and a check data are transmitted from the control circuit 20 to the control circuit CC of the air bag control system 30. As a result, the air bag of the air bag control system 30 is to either of the expansion allowed state or the expansion inhibited state. In a step SD2, an OK data or NG data and the check data for the ON data or the OFF data from the side of the air bag control system 30 are received. Then, the control advances to a step SD3.

In the step SD3, it is determined whether or not the ON/OFF data and the check data which have been transmitted from the passenger detecting system to the air bag control system 30 is sent back in the normal condition from the air bag apparatus to the passenger detecting unit again. When it is determined that the data are normal, i.e., there is not any error in the communication system, the control is continued. When it is determined to be any error in the communication system, the control advances to a step SD4 where it is determined whether or not the failsafe timer is zero. It should be noted that the error detecting operation in this communication system is executed three times, for example. Therefore, when the failsafe counter is determined to be "0", a failsafe process is performed, e.g., to light up a warning lamp. Also, when the failsafe counter is determined to be not "0", the control advances to a step SD5. The counting down process of the failsafe counter is performed and the control is continued.

On the other hand, in a step SE1, the control circuit CC of the air bag control system 30 receives the ON data or OFF data and the check data from the control circuit 20 of the passenger detecting system. In a step SE2, the receive data is checked to determine whether or not the above data are normally received. Then, the control advances to a step SE3. In the step SE3, the OK data or NG data and the check data are transmitted from the control circuit CC of the air bag control system 30 to the control unit 10 of the passenger detecting system.

When it is determined to be not any error in the communication system in the step SE2, the control advances to a step SE4 via the transmission of the OK data in step SE3. In the step SE4, data is updated on the side of the air bag control system 30 in accordance with the OK data. By this, the air bag is updated to either of the expansion allowed state or expansion inhibited state.

Also, when it is determined to be any error in the communication system in the step SE2, the control advances to a step SE5 via the transmission of the NG data in step SE3. In the step SE5, it is determined whether or not the failsafe counter is "0". It should be noted that the error detecting operation in this communication system is set to 3. Therefore, when the failsafe counter is determined to be "0", a failsafe process is performed, e.g., to light up a warning lamp. Also, when the failsafe counter is determined not to be "0", the control advances to a step SE6. In the step SE6, the count down process of the failsafe timer is performed and then the control is continued.

According to this embodiment, the current flows through each of the plurality of band-shaped antenna electrodes 4a to 4f depending upon the contact area of the antenna electrodes and the body portions of the passenger on the seat 1 such as the head, neck, shoulder and back the passenger. Moreover, a pattern of current levels is distinguishable between the adult and a child. The signal data relating to each current level is normalized in accordance with the maximum one tnmax of the signal data tn and the summation ST of normalized data is compared with the first threshold value TH1. Therefore, whether the passenger is the adult or the child is correctly determined.

Also, each signal data tn taken in by the control circuit 20 has the distinguishable current level pattern depending upon the adult or the child. Therefore, the signal data tn is normalized in accordance with the maximum one tnmax of the signal data tn and the gravity P of the signal data is calculated from the normalized data Tn. Thus, the gravity P is compared with the second threshold value TH2. Therefore, whether the passenger is the adult or the child is correctly determined.

Especially, if whether the passenger is the adult or the child is determined in accordance with whether or not the summation of the normalized data ST and the gravity P of the normalized data satisfy the relations of (ST>TH1) and (P<TH2), the precision of the determination can be improved.

Further, the signal data tn taken from the interface circuit into the control circuit 20 is normalized in accordance with the maximum signal data tnmax of the signal data. Therefore, the determination with high reliability can be expected without any influence of the change of the absolute value of each output signal depending upon the wear, the figure and so on of the passenger. Therefore, the air bag of the air bag control system 30 can be reliably set to either of the expansion allowed state or the expansion inhibited state in accordance with the correct passenger determination. Thus, the undesired expansion of the air bag can be prevented.

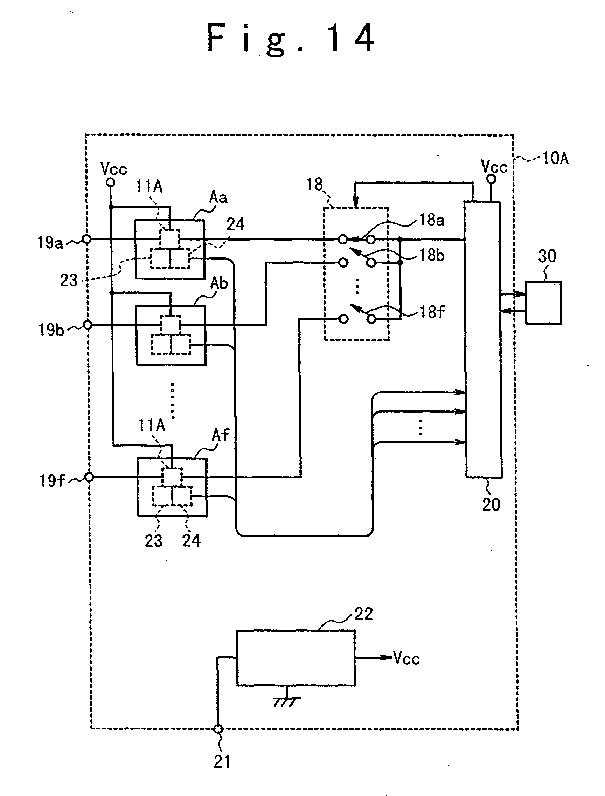

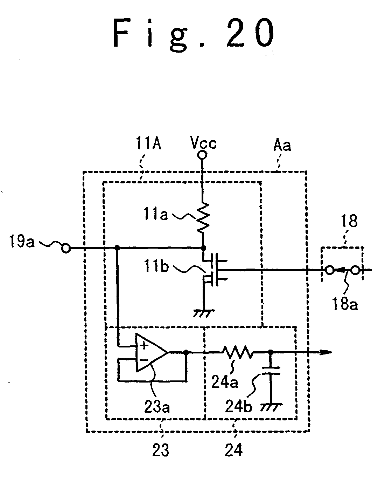

Fig. 14 and Fig. 20 show the passenger detecting system according to the second embodiment of the present invention. The control unit 10A is arranged in the seat frame 3 or in the neighborhood of the seat frame 3 like the first embodiment. The control unit 10A is composed of the switching circuit 18 having the switches 18a to 18f, a plurality of interface circuits Aa to Af, a control circuit 20 and a power supply circuit 22. The switching of the switches 18a to 18f of the switching circuit 18 is performed in response to a signal from the control circuit 20. By this, a gate signal is selectively supplied to one of the interface circuits Aa to Af. The connectors 19a to 19f are connected to the high frequency low voltage signals of the interface circuit Aa to Af, respectively. The antenna electrodes are connected to the connectors 19a to 19f by use of lead lines, as in the first embodiment. Also, the outputs of the interface circuit Aa to Af are connected to the control circuit 20. It should be noted that the air bag control system 30 is connected to the control circuit 20 as in the above first embodiment.

In the control unit 10A, the plurality of interface circuits Aa to Af have the same structure, as shown in Fig. 14. The interface circuit Aa is composed of an oscillating circuit 11A, an impedance converting circuit (buffer circuit) 23 and an AC-DC converting circuit 24. The impedance converting circuit 23 is connected to the high frequency low voltage signal of the oscillating circuit 11A, to perform an impedance converting process. The AC-DC converting circuit 24 converts the output signal of the impedance converting circuit 23 into a direct current signal.

As shown in Fig. 20, in the above-mentioned interface circuit Aa, the oscillating circuit 11A has a resistance 11a and a switch 11b such as a field effect type transistor. These components are connected in series between the Vcc power supply (a constant direct current voltage) from the power supply circuit 22 and the ground potential. A gate signal is given to the gate of the switch 11b from the control circuit 20 through the switching circuit 20. The high frequency low voltage signal of the square wave is outputted from the drain to the antenna electrode 4a through the connector 19a. The high frequency low voltage signal is determined in accordance with the gate signal subjected to PWM (Pulse Wide Modulation) control and outputted from the control circuit 20.

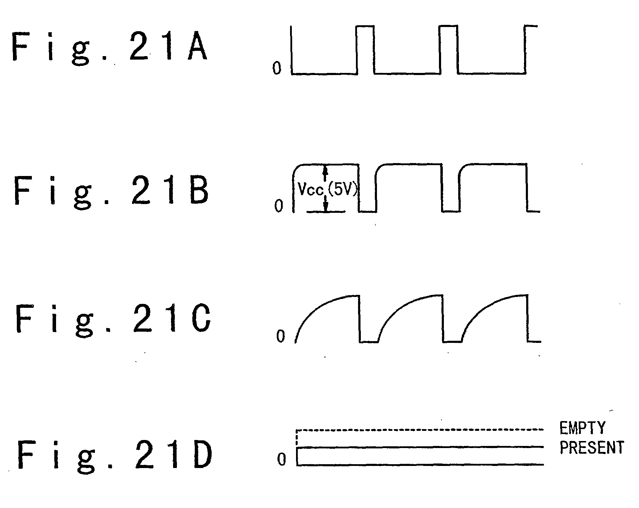

For example, the oscillating circuit 11A generates the high frequency low voltage signal that its frequency is about 120 KHz. It should be noted that the duty ratio (the ON duty) of the gate signal is set to about 10%, as shown in Fig. 21A. However, the duty ratio may be changed into a suitable duty ratio by selecting a circuit constant, the frequency. The high frequency low voltage signal is outputted from the oscillating circuit 11A when the switch 11b is in the off state, and its duty ratio (the ON duty) becomes approximately 90%, as shown in Fig. 21B.

Also, in the interface circuit, the impedance converting circuit 23 is composed of an operational amplifier 23a having an amplification factor of 1. Therefore, the output side of the impedance converting circuit 23 is set to the low impedance, so that the current necessary for the CPU of the control circuit 20 to read can be taken out without any influence to the input side. The AC-DC converting circuit 24 is connected with the output of the impedance converting circuit 23. The AC-DC converting circuit 24 is composed of a smoothing circuit which is composed of a resistance 24a and a capacitor 24b. The output of the AC-DC converting circuit 24 is supplied to the control circuit 20 as the signal data, as in the first embodiment.

Next, the operation of this passenger detecting system in the second embodiment will be described with reference to Figs. 14 and 20 and Figs. 21A to 21D.

First, only the switch 18a of the switching circuit 18 is closed in response to the switching control signal from the control circuit 20, and the other switches 18b to 18f are opened. By this, the gate signal is given to the switch 11b of the oscillating circuit 11A in the interface circuit Aa, as shown in Fig. 21A. Each time the gate signal becomes high, the switch 11b is turned on, so that the drain is set to the ground level not to output the high frequency low voltage signal to the antenna electrode 4a. It should be noted that in this case, the electric charge which has charged in a capacitance component which exists around the antenna electrode 4a is discharged through the switch 11b.

On the other hand, when the gate signal becomes low, the switch 11b is turned off. Therefore, the high frequency low voltage signal with the approximate square wave of 120 KHz and +5 V is outputted to the antenna electrode 4a through the connector 19a, as shown in Fig. 21B. As a result, the weak electric field is generated around the antenna electrode 4a. The current with different level flows depending upon a situation of such as the existence or non-existence of the passenger on the seat, and the distinction of whether the passenger is an adult or a child. It should be noted that because a gate signal is not given to the switches 11b of the oscillating circuits 11A in the interface circuit Ab to Af, the Vcc voltage is applied to the antenna electrode 4b to 4f.

For example, when the passenger is not present on the seat, the current with a low level flows in accordance with the stray capacitance which exists around the antenna electrode 4a. In this case, the rising portion of the high frequency low voltage signal becomes rather dull in accordance with a CR time constant of the stray capacitance and the resistance 11a of the oscillating circuit 11A, as shown in Fig. 21B. On the other hand, when the passenger is present on the seat 1, the capacitance component is larger than the stray capacitance around the antenna electrode 4a in case of the empty state of the seat, so that the current with a high level flows. It should be noted that the capacitance component of the passenger becomes larger in case of the adult than in case of the child. Therefore, the level of the current which flows through the antenna electrode becomes high. In this case, the rising portion of the high frequency low voltage signal becomes like an exponential function. As a result, the rising portion is dull largely in accordance with the CR time constant of the resistance 11a and the large capacitance component which is larger than the stray capacitance, as shown in Fig. 21C. It should be noted that the degree that the rising portion becomes dull is large in case of the adult and small in case of the child, because the capacitance component is different between the adult and the child.

In this way, the high frequency low voltage signal presents various patterns in accordance with the CR time constant. The signal from the antenna electrode is subjected to impedance conversion in the impedance converting circuit 23. That is, in the impedance converting circuit 23, the input side is set to a high impedance state and the output side is set to the low impedance state. The current necessary for the reading operation by the control circuit 20 can be taken suitably according to the necessity. The output signal of the impedance converting circuit 23 is supplied to the AC-DC converting circuit 24. In this circuit 24, the alternate current line voltage is smoothed by the smoothing circuit 24, and is converted into the direct current, as shown in Fig. 21D.

In Fig. 21D, the dotted line shows a direct current conversion level at the time of the empty state on the seat and the solid line shows a direct current conversion level at the time of a passenger existing state on the seat, respectively. There is a level difference between both to the degree which it is possible to distinguish between them. It should be noted that if the resistance 11a is set to be constant in the above-mentioned CR time constant, this direct current conversion level depends on the capacitance component which exists around the antenna electrode. For example, when the capacitance is large as in the adult, the direct current conversion level becomes low, and oppositely, when the capacitance is small as in the child, the direct current conversion level becomes high. When the seat is in the empty condition, the direct current conversion level becomes the largest. For convenience, the direct current output of this current detecting circuit 15 as the signal data may be considered as the variation on the basis of case that the seat is in the empty condition. In this case, the variation is large in case of the adult, and the variation becomes small in case of the child. The direct current output of the current detecting circuit 15 is taken in as the signal data tn by the control circuit 20, is subjected to the A/D conversion and is stored in the memory. Each time the switch 18a of the switching circuit 18 is switched to the switch 18b, the switch 18c, ..., and the switch 18f, the data tn which relates to each antenna electrode 4b to 4f is outputted from the corresponding interface circuit and is taken in one after another by the control circuit 20.

In the control circuit 20, like the above first embodiment, the calculating processes are performed such as the calculation of the amount S of signal data tn, the normalizing process of the signal data on the basis of the largest signal data tnmax, the calculation of the amount ST of normalized data Tn, the calculation of the gravity of the normalization data, and the comparison between the various calculation result and the threshold and the determination result. That is, in this the control circuit 20, in the memory (the memory means) are previously stored the threshold values of the existence or non-existence of the passenger on the seat, the distinction of an adult or a child of the passenger.

More specifically, the threshold value of the existence or non-existence of the passenger is set as follows. That is, when the passenger of the adult or the child is present on the seat, the difference is generated in the capacitance component which exists around each of the antenna electrodes 4a to 4f because of the difference in the contact area for the antenna electrodes 4a to 4f. However, the capacitance component becomes fairly larger than in the stray capacitances which exists around the antenna electrodes 4a to 4f when the seat is empty. As a result, the significant difference is generated in the level of the current which flows through the antenna electrode 4a to 4f. Not only the high level current flows compared with the case of the empty condition of the passenger on the seat, but also the rising portion of the displace current becomes dull largely in the voltage waveform of the line voltage in relation to the difference of CR time constant. The variation of the direct current level outputted from the AC-DC converting circuit 24 from the empty level becomes large. Therefore, when the passenger is present on the seat, the direct current level becomes low, as shown by the solid line in Fig. 21D.

However, the variation from the empty level shown by the dotted line in the same figure becomes large. For this reason, a level between the solid line corresponding to the amount S of the signal data tn and the dotted line is set as the threshold value THe of the existence or non-existence of the passenger. It should be noted that the passenger is judged to be present on the seat when the amount S of the variations of the direct current output is larger than the threshold value THe, and it is judged not to be present if small.

Also, the threshold value for the distinction of a passenger is set as follows. That is, when the passenger of the adult or the child is present on the seat, the difference is generated in the capacitance component around the antenna electrode because of the difference of the contact area between each antenna electrode and the body portions of the passenger. As a result, the level of the current which flows through the antenna electrode is different. The current level becomes high in case of the passenger of the adult compared with the case of the passenger of the child. In addition, the rising portion becomes dull in the voltage waveform of the line voltage obtained from the antenna electrode in relation to the difference of CR time constant.

The direct current level of the signal data tn outputted from the AC-DC converting circuit 24 becomes large in the empty state of the seat. This signal data tn is normalized in accordance with the maximum signal data tnmax of the signal data, and the summation ST of the normalized data is calculated. Therefore, an intermediate value between the summations ST of the adult and that of the child is set as the threshold value TH1 for the distinction of the passenger. It should be noted that it is judged to be an adult if the summation ST of the actual normalized data is larger than this threshold value TH1 and it is judged to be a child if small.

When the direct current output from the AC-DC converting circuit 24 has a higher level than the empty level when the seat is empty and is higher than the threshold value TH1, the present passenger on the seat is judged to be an adult. As a result, the air bag control system 30 shown in Fig. 6 is set to the expansion allowed state of the air bag in response to the expansion control signal from the control circuit 20.

Oppositely, when the direct current output from the AC-DC converting circuit 24 has a lower level than the threshold value TH1, the present passenger on the seat is judged to be a child. As a result, the air bag control system 30 shown in Fig. 6 is set to the expansion inhibited state of the air bag in response to the expansion control signal from the control circuit 20.

According to this embodiment, in addition to the attainment of the same effect as in the above-mentioned first embodiment, the following effects will be expected. That is, in this embodiment, the weak electric field is selectively generated around the plurality of the antenna electrodes 4a to 4f. Also, the determination of situation of the passenger are performed through the calculating processes of the signal data which relates to the electric current flowing in accordance with the weak electric field.

However, when a specific one of the antenna electrodes 4a to 4f is selected, the direct current voltage Vcc is given to all the antenna electrodes other than the specific antenna electrode. Therefore, the influence of the foreign noise and so on can be removed, and the electric field to have been generated in the neighborhood of the specific antenna electrode becomes stable. As a result, the electric current flowing in accordance with this is also stabilized. Therefore, the determination precision and the reliability of the determination of the passenger which is in accordance with the signal data which relates to the electric current can be improved. Especially, when the air bag control system 30 installed, the air bag of the air bag control system 30 can be surely set to either of the expansion allowable state or the expansion inhibited state in accordance with the determination result. Thus, undesired expansion of the air bag can be prevented in previous.

Also, in the interface circuits Aa to Af, the AC-DC converting circuit 24 is connected with the high frequency low voltage is outputted from the oscillating circuit 11A. Therefore, the voltage waveform of the line voltage which has relation with the electric currents which flow to the antenna electrodes 4a to 4f is taken in and is converted into the direct current signal. The existence or non-existence of the passenger on the seat can be appropriately determined in accordance with the variation from the empty level of this conversion data.

Also, the impedance converting circuit 23 is connected between the antenna electrodes 4a to 4f and the AC-DC converting circuit 24. Thus, the input side of the impedance converting circuit 23 is set to the high impedance state and the output side is set to the low impedance state. Therefore, in the case that the direct current output of the AC-DC converting circuit 24 is taken in as the signal data by the control circuit 20, even if the electric current is taken out by the control circuit 20, it never has an influence on the high frequency low voltage signal to be supplied to the antenna electrodes 4a to 4f at all. Therefore, the passenger detection of the high precision becomes possible.

Also, the capacitance component which exists around the antenna electrode is different depending upon whether or not the passenger of the adult is present on the seat or the passenger of the child is present. Therefore, the rising portion of the high frequency low voltage signal is made dull by appropriately setting the CR time constant which is due to the capacitance component and the resistance 11a connected with the antenna electrode. Therefore, the distinguishable signal data are obtained by the AC-DC converting circuit. Thus, the information of the passenger can be accurately determined in accordance with the signal data.

Moreover, the high frequency low voltage signal is outputted from the oscillating circuit 11A and is applied to the antenna electrodes 4a to 4f which are arranged in the seat. The switch 11b is switched in response to the gate signal of the desired frequency, for example, 120 KHz, so that the voltage signal is obtained from the Vcc power supply of a single voltage generated from the power supply circuit 22. Compared with the oscillating circuit having the structure in which the direct current is converted into the high frequency alternate current signal and then waveform-shaped into the square wave, the circuit structures of the control unit and the oscillating circuit 11A can be simplified. Also, the cost of the system can be effectively reduced.

It should be noted that the present invention is not limited to only the above embodiments at all. For example, the number of antenna electrodes in the seat may be suitably increased and decreased. Also, it is possible to change the shape of the antenna electrode into a rectangular band-shape or loop-shape in other than the band-shape. Also, if the interface circuit can detect the signal data which relates to the electric current which flows through the antenna electrode, the internal structure may have a different suitable structure other than the illustration example.

In addition, the oscillating circuit may be formed to use a pulse signal which is outputted from the control circuit, in addition to the oscillating circuit to make the high frequency low voltage of the sine wave or the square wave. The output frequency may be set to a suitable frequency other than 120KHz, and the voltage may be used in a range of 5 to 12 V. Also, the amplitude control circuit can be omitted depending on the precision of the system power supply, the function which is expected of the system and so on. Moreover, the steps SC1 and SC2 can be omitted in the passenger determining flow.

Next, the passenger detecting system according to the third embodiment of the present invention will be described below. The operation principle in the third embodiment is the same as in the first and second embodiments.

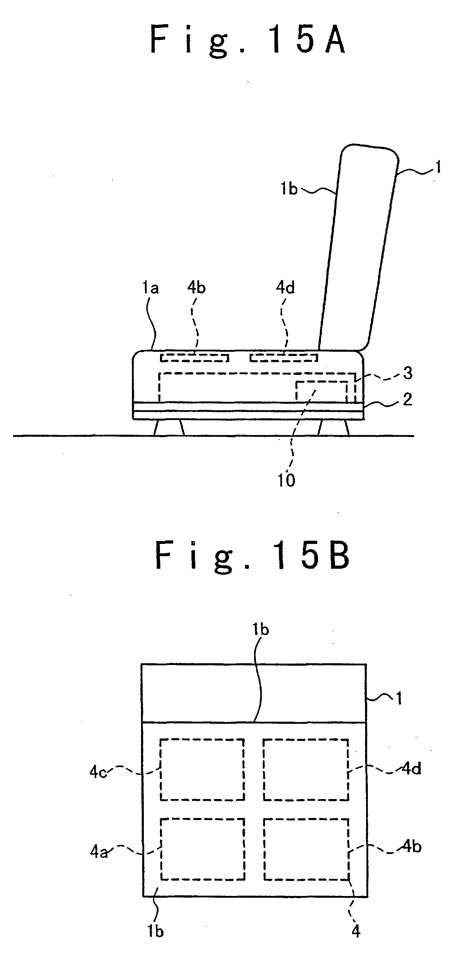

Figs. 15A and 15B shows a driver or passenger seat 1. Referring to Figs. 15A and 15B, a seat 1 is composed of a seat section 1a and a back supporting section 1b. The seat section 1a is composed of a seat frame 3 which is fixed on a base 2 which is slidable before and back, a cushion material which is arranged on the seat frame 3, and an exterior material which covers the cushion material. The back supporting section 1b is composed of a cushion material which is arranged on the front side of the seat frame, and an exterior material by which the cushion material is covered.

In the seat section 1a, an antenna electrode section 4 composed of a plurality of antenna electrodes 4a to 4d is arranged. The respective antenna electrodes 4a to 4d are formed to have substantially the same shape, e.g., a polygon shape, and are symmetrically arranged to be spaced from each other. However, the plurality of antenna electrodes may be arranged at the back supporting section 1b or may be arranged in the both. It should be noted that a control unit 10 to be described later is incorporated into the seat 1, and is arranged in the seat frame 3 or in the neighborhood of the seat frame 3, for example.

The antenna electrode section 4 is a base member and the antenna electrodes 4a to 4d. The base member is formed of insulating member such as non-woven cloth. The antenna electrode section 4 is arranged inside the exterior material of the seat section 1a. The antenna electrode section 4 is formed of conductivity cloth, for example. However, the fibers which have a thread-shaped metal or conductor may be woven into the base member or the seat cloth surface of the seat section 1a, or a conductive paint may be coated on the cloth surface. Also, lead lines composed of shielded wires are electrically connected with the desired portion of the antenna electrodes 4a to 4d, respectively. Also, the respective ends of the lead lines are connected with connectors 19a to 19d of the control unit 10 to be described later.

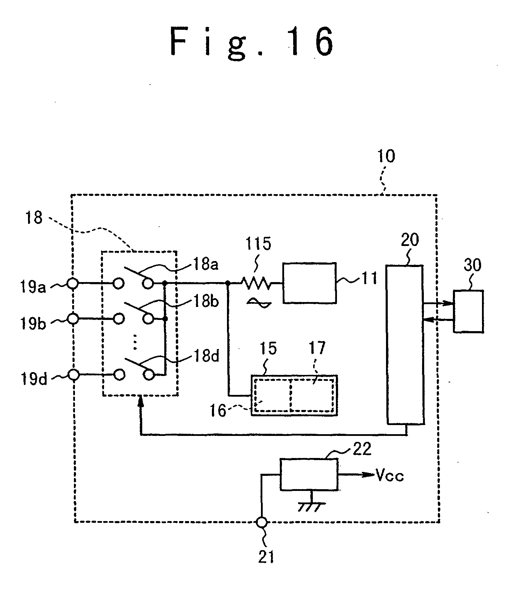

The control unit 10 is incorporated into the above-mentioned seat 1. For example, as shown in Fig. 16, the control unit 10 is composed of an oscillating circuit 11, a resistance 115, a switching circuit 18, a current detecting circuit 15, a control circuit 20 and a power supply circuit 22. The oscillating circuit 11 outputs a high frequency low voltage signal of an alternate current sine wave by which weak electric fields are generated around the antenna electrodes 4a to 4d, respectively. The resistance 115 is connected with the oscillating circuit 11. The switching circuit 18 has a plurality of switches 18a to 18d and is connected with the resistance 115 and the connectors 19a to 19d. The current detecting circuit 15 is connected with a node between the resistance 115 and the switching circuit 18. The current detecting circuit 15 is connected to either one of the antenna electrodes 4a to 4d through the switching circuit 18 and one of the connectors 19a to 19d in case of a closing operation. The connectors 19a to 19d are arranged in the housing of the control unit 10. The current detecting circuit 15 converts into a direct current signal, the alternate current line voltage which relates to the current which flows through the antenna electrode 4a to 4d. The control circuit 20 contains a CPU, an analog-to-digital converting section, an external memory such as an EEPROM, an ROM and so on.

A connector 21 is connected with a battery power supply (not shown) which is arranged in the housing. The power supply circuit 20 is connected with the connector 21. These components are accommodated in the identical housing and form a control unit 10, and is fixed so as not to be exposed on the passenger side in the seat frame 3 of the seat section 1a of the seat 1. An air bag control system 30 with the structure shown in Fig. 6 is connected with the control circuit 20 of the control unit 10. It should be noted that the selective switching of the switches 18a to 18d of the switching circuit 18 is performed in accordance with a signal from the control circuit 20.

In the above-mentioned control unit 10, the oscillating circuit 11 is composed of a quadrature oscillating circuit to output a high frequency low voltage signal of the sine wave. It should be noted that the suitable oscillating circuits such as the Wien bridge oscillating circuit can be used as the oscillating circuit, in addition to the quadrature oscillating circuit. In the output of the oscillating circuit 11, the frequency is about 120 KHz, and the voltage is 5 VP-P. However, it is possible to change these values into the suitable values.

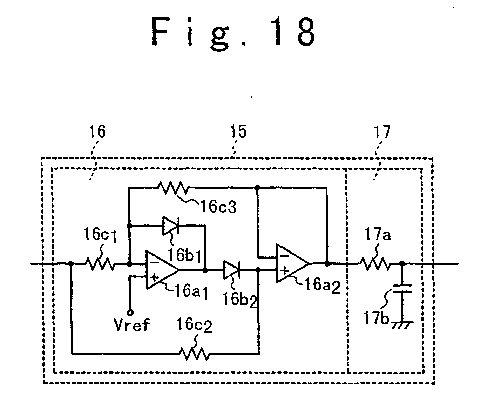

Also, in the control unit 10, the current detecting circuit 15 is composed of a full wave rectifying circuit 16 and a smoothing circuit 17, as shown in Fig. 18. The full wave rectifying circuit 16 is composed of the first and second operational amplifiers 16a1 and 16a2, and the first and second diodes 16b1 and 16b2 and resistances 16c1 to 16c3. The smoothing circuit 17 is composed of a resistance 17a and a capacitor 17b. It should be noted that the control circuit 20 is connected with the output side of the current detecting circuit 15.

Moreover, in the control unit 10, the power supply circuit 22 drops the voltage of 12 V from the battery power supply into 5 V to generate a single Vcc power supply. The power supply circuit 22 is composed of 3 terminal regulator. The single Vcc power supply is generated by the power supply circuit 22 is supplied to components, which need the power supply, of all the component of the control unit 10. It should be noted that it is desirable to make the Vcc power supply unitary but it is possible to set to the different voltages.

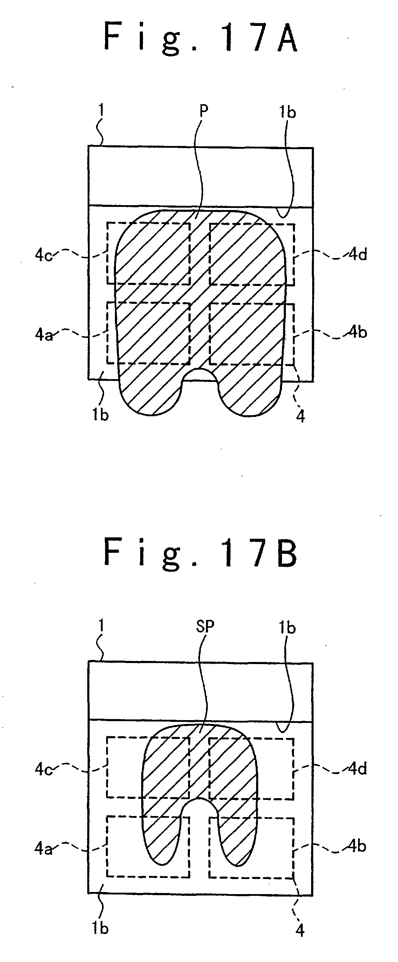

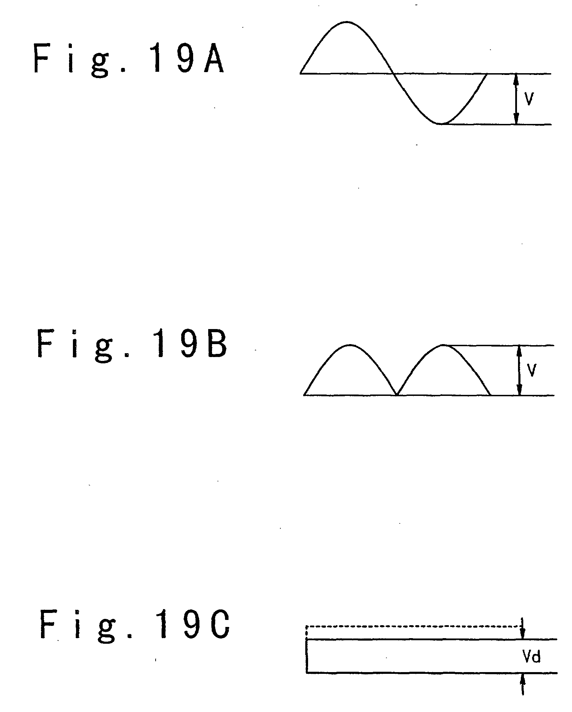

Next, the operation of the passenger detecting system with the above structure will be described with reference to Figs. 17A and 17B and Figs. 19A to 19C. When the oscillating circuit 11 in Fig. 16 first becomes an oscillation state, the high frequency low voltage signal of the sine wave as shown in Fig. 19A is outputted from the oscillating circuit 11. The high frequency low voltage signal is supplied to the antenna electrodes 4a to 4d through the resistance 115, the switches 18a to 18d of the switching circuit 18, and the connectors 19a to 19d. As a result, the weak electric field is selectively generated around one of the antenna electrodes 4a to 4d. In this case, the switching circuit 18 controls the opening and closing operation in accordance with the switching control signal from the control circuit 20. First, only the switch 18a is closed, and next, only the switch 18b is closed. Hereinafter, only a specific switch is closed in order in the same way. At the same time, the switching control is performed in such a manner that the other switches are opened. Therefore, when the specific one of the switches 18a to 18d is closed, the high frequency low voltage signal is supplied to the specific one of the antenna electrodes 4a to 4d through the resistance 115, the specific one of the switches 18a to 18d and the specific one of the connectors 14a to 14d. As a result, the weak electric field is generated around the specific antenna electrode. The current flows with the level which is different in accordance with whether or not the passenger is present on the seat 1 and whether the passenger is an adult or a child.

When the passenger is present on the seat1, a capacitance component which is larger than a stray capacitance at the time of the passenger non-existing state exists around the specific antenna electrode. Because the current with high level flows, the voltage drop by the resistance 115 becomes large. Because the adult becomes larger than the child in the capacitance component of the passenger, the level of the current which flows through the antenna electrode becomes high and the voltage drop by the resistance 115 becomes large. Therefore, the line voltage of the transmission system of the oscillating circuit 11, the resistance 115, and the switching circuit 18 becomes shown in Fig. 19A.

Because the capacitance component is different between the adult and the child so that the current which flows through the antenna electrode is different, the line voltage V is small in case of the adult, and large in case of the child. On the other hand, in case of empty state in which nobody is present on the seat 1, the current with a low level flows in accordance with the stray capacitance which exists around the specific antenna electrode. However, the voltage drop by the resistance 115 becomes very small and the line voltage V is set to the value which is near to the output voltage from the oscillating circuit 11.

In the way, the alternate current line voltage of the output side of the resistance 115 is taken in by the current detecting circuit 15. The alternate current line voltage is first full-wave-rectified in the full wave rectifying circuit 16 as shown in Fig. 19B, and subsequently is converted into a direct current Vd by the smoothing circuit 17 as shown in Fig. 19C.

More particularly, when the voltage of the positive half cycle of the alternate current line voltage is supplied to the full wave rectifying circuit 16, the output side of the first operational amplifier 16a1 is negatively inverted and the second diode 16b2 is set to a cutoff state. As a result, the voltage of the positive half cycle which is applied to the second operational amplifier 16a2 through the resistance 16c2 is outputted to the output side of the second operational amplifier 16a2.

Next, when the voltage of the negative half cycle is inputted to the full wave rectifying circuit 16, the output side of the first operational amplifier 16a1 is inverted in a positive direction and the second diode 16b2 is set to the on state. As a result, the voltage which is inverted in the positive direction is outputted to the output side of the second operational amplifier 16a2. Therefore, the output voltage as shown in Fig. 19B is obtained as the output of full wave rectifying circuit 16.

In the way, the direct current output Vd of the current detecting circuit 15 differs in the level in accordance with the output of the full wave rectifying circuit 16. In Fig. 19C, the dotted line indicates a direct current converting level at the time of the non-existence state of a passenger on the seat and the solid line indicates a direct current conversion level at the time of the existence of the passenger. There is a difference between both to the degree which it is possible to distinguish between both. It should be noted that the direct current conversion level depends on the capacitance component which exists around the antenna electrode, if the resistance value of the resistance 115 is set to a constant value. For example, it becomes small when the capacitance is large as in the adult, and oppositely, it becomes large when the capacitance is small, as in the child. Also, when the seat 1 is in the empty condition, it becomes the largest. The direct current output of the current detecting circuit 15 is taken in as signal data one after another by the control circuit 20, is subjected to the A/D conversion and is stored in the memory.

In the control circuit 20, threshold value are previously stored which are concerned with the situation of the passenger on the seat 1, i.e., the existence or non-existence of a passenger, and the distinguishing of an adult or a child. More specifically, the threshold value relating to the existence or non-existence of the passenger is set as follows. That is, as shown in Figs. 17A and 17B, when the passenger P of the adult or the passenger SP of the child is present on the seat 1, the capacitance component which exists around each antenna electrode is different from each other depending upon the difference in the opposing area between each antenna electrode and the body portions of the passenger. As a result, the levels of the current which flow through the antenna electrodes are different from each other.

In case of the passenger P of the adult, the level of the current becomes high, compared with the case of the passenger SP of the child. Therefore, the voltage drops across the resistance 115 are different from each other in the level, and the direct current levels outputted from the current detecting circuit 15 are also different. Therefore, an intermediate level between the direct current output which relates to the current level in case of the child SP and the direct current output at the time of the empty state which is shown by the dotted line in Fig. 13(c) is set as the threshold value for the determination of the existence or non-existence of the passenger.

It should be noted that the passenger is determined to be present on the seat if the direct current output is smaller than the threshold value. Also, it is determined not to be present on the seat if larger. The threshold value is desirable to be set for the summation of the direct current outputs from the current detecting circuit 15 which relates to the current which flows through the respective antenna electrodes 4a to 4d. However, it is possible to set every antenna electrode.

Also, the threshold value relating to the distinguishing of a passenger is set as follows. That is, as shown in Fig. 17A, when the passenger P of the adult is present on the seat 1, the level of the current which flows through each antenna electrode becomes large and the line voltage of the transmission system becomes low because of the voltage drop by the resistance 115. The direct current level which is outputted from the current detecting circuit 15 is a level (Vd) indicated by the solid line in Fig. 19C.

On the other hand, as shown in Fig. 17B, when the passenger SP of the child is present on the seat 1, the level of the current which flows through each antenna electrode becomes small. Also, the line voltage of the transmission system becomes small because of the voltage drop by the resistance 115. The direct current level which is outputted from the current detecting circuit 15 is a level between the level shown by a solid line and a level shown by a dotted line in Fig. 19C. Therefore, the direct current output which relates to the intermediate current level between the level of the adult P and the level of the child SP is set as the threshold value for the distinguishing. It should be noted that it is determined to be adult P if the direct current conversion data is smaller than the threshold values and it is determined to be a child SP if larger. Especially, it is desirable that the threshold value is set to the summation of the direct current outputs as the signal data from the current detecting circuit 15 which relates to the current which flows through each antenna electrode. However, it is possible to set every antenna electrode.

Therefore, the signal data relating to the existence or non-existence of the passenger are taken in by the control circuit 20 and is compared with the threshold value relating to the existence or non-existence of the passenger which is previously stored in the control circuit 20. For example, as shown in Fig. 117A, when the signal data from the current detecting circuit 15 are lower than the threshold value relating to the distinguishing of existence or non-existence, the passenger existing on the seat 1 is determined to be adult P. By this, the air bag control system 30 shown in Fig. 6 is set to the expansion allowed state of the air bag in response to the expansion control signal from the control circuit 20.

Oppositely, as shown in Fig. 17B, when the signal data from the current detecting circuit 15 are higher than the threshold value relating to the distinguishing of the existence or non-existence of the passenger, the existing passenger on the seat 1 is determined to be a child SP. By this, the air bag control system 30 shown in Fig. 6 is set to the expansion inhibited state in response to the expansion control signal from the control circuit 20.

That is, the expansion control signal from the control circuit 20 is supplied to the control circuit CC of the air bag control system 30. In case of the latter, it is set so as not for a gate signal to be supplied to the switching element SW2 on the passenger seat side when the automobile collides. It should be noted that the gate signal is supplied to the switching element SW1 on the driving seat side. In the case of the former, it is set for the gate signal to be supplied to the switching elements SW1 and SW2.

In this way, according to the passenger detecting system in the third embodiment, the current determined in accordance with the capacitance component which exists around the antenna electrode flows through the antenna electrodes 4a to 4d in accordance with the high frequency low voltage signal from the oscillating circuit 11. In this case, the voltage drop according to the current is caused by the resistance 115 which is connected with the transmission system. The line voltage of the transmission system becomes the voltage which is related with the current which flows through the antenna electrode. The current which flows through the antenna electrode is changed depending upon the existence or non-existence of the passenger on the seat 1 and whether or not the passenger is an adult. Therefore, by converting the line voltage from the alternate current into the direct current in the current detecting circuit 15, the direct current signal data is obtained to be possible to distinguish. The control circuit 20 takes in the signal data and can appropriately determine the existence or non-existence of the passenger on the seat 1 in accordance with the signal data relating to the direct current signal data.

In addition, the existence or non-existence of the passenger on the seat 1 is determined in accordance with the signal data relating to the direct current output from the current detecting circuit 15 by the control circuit 20. Also, the determining result is transmitted to the air bag control system 30 through the communication section. Therefore, the air bag apparatus can be appropriately controlled in accordance with the existence or non-existence of the passenger.

Next, the passenger detecting system according to the fourth embodiment of the present invention will be described below.

In the above third embodiment, the full wave rectifying circuit 16 of the current detecting circuit 15 is composed of the first and second operational amplifiers 16a1 and 16a2, the first and second diodes 16b1 and 16b2, and resistances 16c1 to 16c3. However, because the forward voltage of each of the first and second diodes 16b1 and 16b2 has a negative temperature coefficient, the forward voltage changes depending upon the ambient temperature. For this reason, as the output voltage of the full wave rectifying circuit 16, the voltage changes which corresponds to the cycle which is inverted by the first operational amplifier 16a1 so that the level of the direct current output from the smoothing circuit 17 changes, too.

In the passenger detecting system in the fourth embodiment, the current detecting circuit 15 is simplified and the manufacturing cost is reduced.

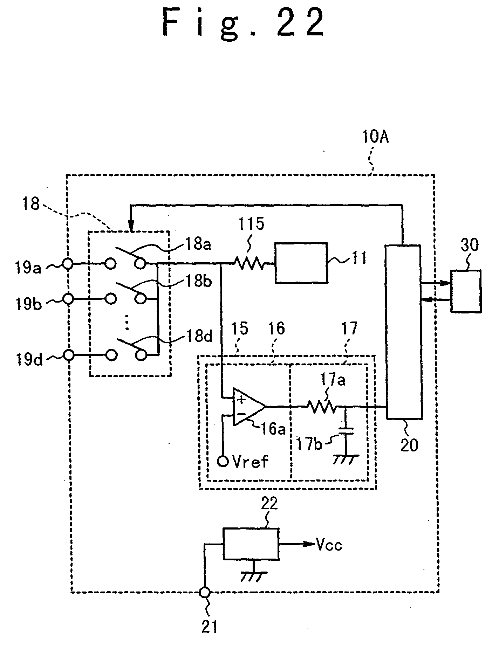

In Fig. 22, a reference numeral 10A is a control unit which is incorporated into the seat 1 shown in Fig. 15A. As shown in Figs. 22, the control unit 10A is composed of an oscillating circuit 11, a resistance 115, a switching circuit 18 having a plurality of switches 18a to 18d, an current detecting circuit 15, connectors 19a to 19d, a control circuit 20 and a power supply circuit 20. The oscillating circuit 11 outputs a high frequency low voltage signal of alternate current sine wave to supply to the antenna electrodes 4a to 4d such that a weak electric field is generated around the antenna electrodes 4a to 4d. The resistance 115 is connected with a transmission system from the oscillating circuit 11 to the antenna electrode section 4. The switching circuit 18 for the antenna electrode section 4a to 4d are connected with the output side of the resistance 115. The connectors 19a to 19d are arranged in the housing of the control unit 10A and connected to the switches 18a to 18d of the switching circuit 18. The current detecting circuit 15 is connected to a node between the output side of the resistance 115 and the switching circuit 18 and converts into a direct current, an alternate current line voltage on the transmission system line. The line voltage relates to the current which flows through the antenna electrodes 4a to 4d on the output side of the resistance 115. The control circuit 20 contains a CPU, an analog-to-digital converting section, and an external memory such as an EEPROM, an ROM and so on. The connector 21 is connected with a battery power supply (not shown) which is arranged in the housing. The power supply circuit 20 is connected with the connector 21.

These components are accommodated in the identical housing and form the control unit 10A, and is fixed so as not to be exposed on the passenger side in the seat frame 3 of the seat section 1a of the seat 1. An air bag control system 30 with the structure shown in Fig. 6 is connected with the control circuit 20 of the control unit 10A. It should be noted that the selective switching of the switches 18a to 18d of the switching circuit 18 is performed in accordance with a switching control signal from the control circuit 20.

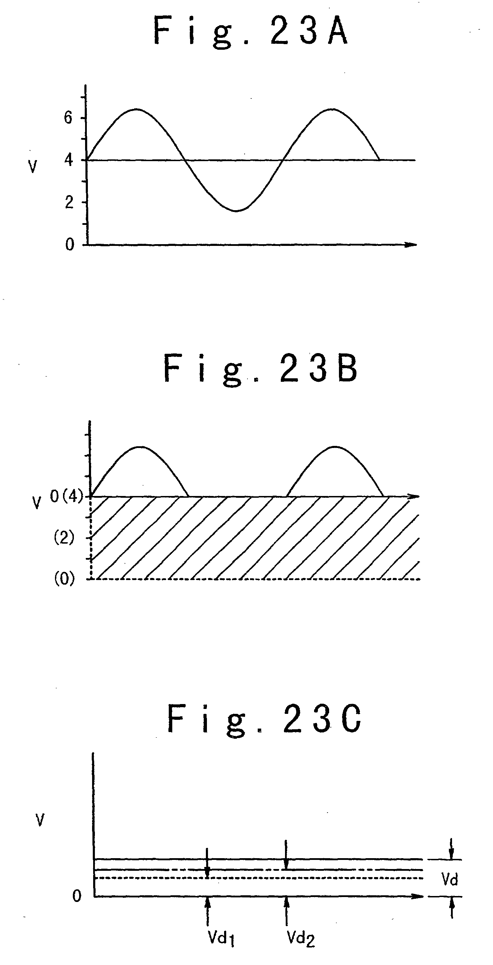

In the above-mentioned control unit 10A, the oscillating circuit 11 is composed of a quadrature oscillating circuit to output the sine wave alternate current signal such as a high frequency low voltage signal. As shown in Fig. 23A, only the sine wave component on the positive side (for example, 5 Vp-p at the center of 4 V) is used. It should be noted that the suitable oscillating circuits such as the Wien bridge oscillating circuit can be used as the oscillating circuit, in place of the quadrature oscillating circuit.

Also, the current detecting circuit 15 is composed of a half wave rectifying circuit 16 and a smoothing circuit 17. The half wave rectifying circuit 16 is composed of a single operational amplifier 16a. The line voltage in the transmission system is applied to a non-inversion input terminal (+), and a suitable reference voltage Vref such as the voltage of 4 V is applied to an inversion input terminal (-).

When the oscillating circuit 11 is composed of the quadrature oscillating circuit and first becomes an oscillation state, the sine wave high frequency low voltage signal is outputted from the oscillating circuit 11. It should be noted that the output voltage of the oscillating circuit 11 is set to be the voltage of 5 Vp-p at the center of 4 V. The output voltage is supplied to the antenna electrodes 4a to 4d through the resistance 115, i.e., a transmission system, and the alternate current line voltage appears on the output side of the resistance 115 as shown in Fig. 23A.

The high frequency low voltage signal is supplied to the antenna electrodes 4a to 4d through the transmission system, the switching circuit 18, and the connectors 19a to 19d. As a result, the weak electric field is generated around the antenna electrodes 4a to 4d. In this case, the switching circuit 18 controls the opening and closing operation in accordance with the switching control signal from the control circuit 20. First, only the switch 18a is closed, and next, only the switch 18b is closed. Hereinafter, only a specific switch is closed in order in the same way. At the same time, the switching control is performed in such a manner that the other switches are opened. Therefore, when the specific one of the switches 18a to 18d is closed, the high frequency low voltage signal is supplied to the specific one of the antenna electrodes 4a to 4d. As a result, the weak electric field is generated around the specific one of the antenna electrodes 4a to 4d. The current flows with the level which is different according to the existence or non-existence of the passenger on the seat 1 and distinction of the adult or the child of the passenger.

When a passenger is not present on the seat 1, a lower current flows in accordance with a stray capacitance exists around the specific antenna electrode. Because the voltage drop by the resistance 115 becomes small, the line voltage on the output side of the resistance 115 is approximate to the output voltage of the oscillating circuit 11. On the other hand, when the passenger is present on the seat 1, a higher current flows because a large capacitance component exists around the specific antenna electrode compared with the stray capacitance at the time of the empty seat.

It should be noted that the capacitance component of passenger is larger in case of the adult than in case of the child and the level of the current which flows through the antenna electrode becomes high. For this reason, the voltage drop by the resistance 115 becomes large. The line voltage of the output side of the resistance 115 is fairly lower than the output voltage of the oscillating circuit 11 in case of the adult and is higher than the level of the adult in case of the child but is the level which is lower than the output voltage of the oscillating circuit 11.

The line voltage of the transmission system which corresponded to the existence or non-existence of the passenger on the seat 1 in the way is supplied to the current detecting circuit 15A. That is, the line voltage is supplied to the non-inversion input terminal (+) of the operational amplifier 16a of the half wave rectifying circuit 16. The reference voltage Vref of +4 V(DC) is applied to the inversion input terminal (-) of the operational amplifier 16a. Therefore, the half wave rectified voltage having the center voltage of 4 V is outputted on the output side as shown in Fig. 23B. The half wave rectified voltage is smoothed by the smoothing circuit 17 which is composed of a resistance 17a and a capacitor 17b. Thus, the direct current output is obtained as shown in Fig. 23C.

It should be noted that in Figs. 23A to 23C, the direct current output Vd shown by the solid line shows a direct current conversion level at the time of the empty state. Also, the direct current output Vd1 shown by the dotted line shows a direct current conversion level at the time of the existence state of the passenger P of the adult. The direct current output Vd2 shown by two chain lines shows a direct current conversion level at the time of the existence state of the passenger SP of the child. There are distinguishable differences in level among three cases. The direct current outputs from the current detecting circuit 15 are taken in one after another by the control circuit 20, is A/D converted and then is stored in a memory.

In the control circuit 20, threshold values are previously stored which are concerned with the situation of a passenger on the seat 1 (the existence or non-existence, and the distinguishing of an adult or a child). More specifically, the threshold value relating to the existence or non-existence of the passenger is set as follows.

Tha is, as shown by Fig. 17A and 17B, when the passenger P of the adult or the passenger of the child SP is present on the the seat 1, the difference is generated in the capacitance component which exists around each antenna electrode depending upon the difference in the opposing area between each antenna electrode and the body of the passenger. As a result, the level of the current which flows through the antenna electrode is different, and the voltage drop by the resistance 115 is also different. Therefore, the line voltage takes different values. Also, the direct current level which is outputted from the current detecting circuit 15 takes the different levels, too, as shown in Fig. 23C. Therefore, a threshold value relating to the existence or non-existence of the passenger is set to a value between the solid line and two chain line in Fig. 23C.

Also, the threshold value for the distinguishing of a passenger relating to whether or not the passenger is an adult is set to a value between the dotted line and two chain line in Fig. 23C. It is desirable to set these threshold values to the summation of the direct current outputs from the current detecting circuit 15 which relates to the current which flows through each antenna electrode. However, it is possible to set every antenna electrode.

Therefore, the signal data relating to the existence or non-existence of the passenger are taken in by the control circuit 20 and are compared with the threshold value relating to the existence or non-existence of the passenger which has been previously stored in the control circuit 20. For example, as shown in Fig. 17A, when the direct current outputs from the current detecting circuit 15 is lower than the threshold value relating to the distinguishing of existence or non-existence, an passenger on the seat 1 is determined to be adult P. By this, the air bag of the air bag control system 30 shown in Fig. 6 is set to the expansion allowed state in response to the expansion control signal from the control circuit 20.

Oppositely, as shown in Fig. 17B, the direct current outputs from the current detecting circuit 15 are higher than the threshold value relating to the distinguishing of existence or non-existence, an passenger on the seat 1 is determined to be a child SP. By this, the air bag of the air bag control system 30 shown in Fig. 6 is set to the expansion inhibited state in response to the expansion control signal from the control circuit 20.

That is, the expansion control signal from the control circuit 20 is supplied to the control circuit CC of the air bag control system 30. In case of the latter, it is set so as not to supply the switching element SW2 on the passenger seat side with the gate signal when the automobile collides. It should be noted that the gate signal is supplied to the switching element SW1 on the driving seat side. In the case of the former, it is set for the gate signal to be supplied to the switching elements SW1 and SW2.

According to the embodiment, because the half wave rectifying circuit 16 of the current detecting circuit 15 is composed of the single operational amplifier 16a, the circuit structure can be simplified remarkably compared with the full wave rectifying circuit 16 in the above embodiment and can reduce a cost to 30 to 50%.

Also, because a diode is not used for the half wave rectifying circuit 16 at all, unlike the full wave rectifying circuit 16 in the third embodiment. The change of the ambient temperature never changes the direct current output of the current detecting circuit 15. Therefore, not only the precision of the determination relating to the existence or non-existence in the control circuit 20 which is in accordance with the direct current output but also the reliability thereof can be improved.

Especially, the existence or non-existence of the passenger is determined in accordance with the signal data outputted from the current detecting circuit 15 and taken in by the control circuit 20. The plurality of antenna electrodes 4a to 4d are arranged in the seat 1. Further, one of these antenna electrodes are selected suitably by the switching circuit 18. Also, a lot of signal data are taken in by the control circuit 20. Therefore, because a determination in the control circuit 20 is performed in accordance with the lot of signal data, the passenger detection with the higher reliability becomes possible.

Also, the control units 10A accommodates circuit elements such as the oscillating circuit 11, the switching circuit 18, the current detecting circuit 15, the control circuit 20, the power supply circuit 20 in the same housing. Therefore, it can be incorporated in the seat 1. Because it is relatively easy to secure an arrangement space at the seat frame 3 of the seat section 1a or in the neighborhood thereof, it is possible to incorporate simply and easily even if the control unit 10A becomes large a little.

Also, because the control unit 10A is incorporated into the seat 1 where the plurality of antenna electrodes 4a to 4d are arranged, when the antenna electrode section 4 and the control unit 10A are connected electrically by lead lines 6a to 6d, the wiring length can be made quite short, compared with the case that the control unit 10A is installed in a dashboard, an engine room, and so on. Therefore, in addition to cost reduction, the influence of external noise can be reduced by the shortening of the wiring length. As a result, the reliability of the passenger detection function of the system can be improved.

Moreover, the air bag of the air bag control system 30 is set to either of the expansion allowed state or the expansion inhibited state in accordance with the determination of whether a passenger is the adult or the child. When the passenger is determined to be a child SP in accordance with the level of the direct current outputs of the current detecting circuit 15, the air bag of the air bag control system 30 is set to the expansion inhibited state. Therefore, even if the automobile collides, the air bag is not expanded and the appropriate control of the air bag control system 30 becomes possible.

Next, the passenger detecting system according to the fifth embodiment of the present invention will be described below.

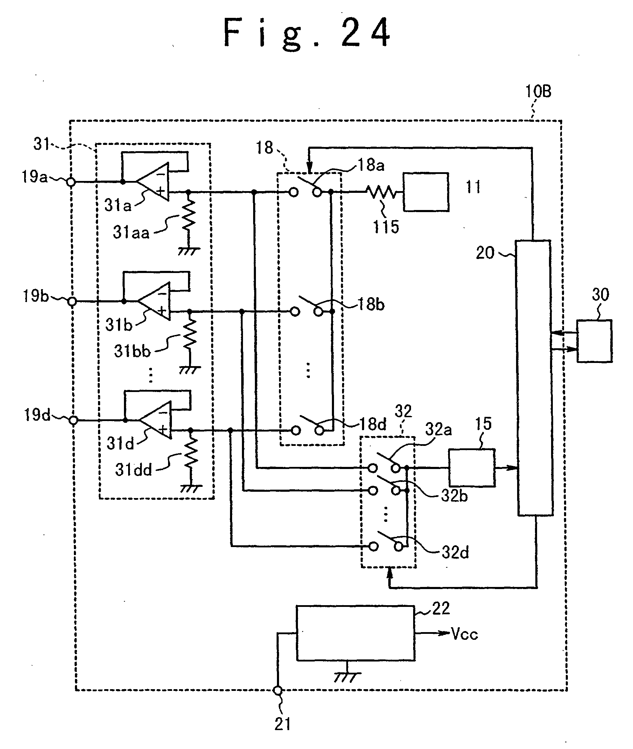

Fig. 24 is a diagram showing the fifth embodiment of the passenger detecting system according to the present invention. Of the components, a control unit 10B is basically the same as the embodiment which is shown in Fig. 22. The different point is in that that a buffer circuit 31 is connected between a first switching circuit 18 and the connectors 19a to 19d. Also, a second switching circuit 32 is provided to select a suitable one of the antenna electrodes 4a to 4d on the output side of the first switching circuit 18. Moreover, the current detecting circuit 15 is connected with the output side of the second switching circuit 32.

The buffer circuit section 31 is composed of a plurality of buffer circuits which correspond to the antenna electrodes 4a to 4d. The respective buffer circuits are composed of operational amplifiers 31a to 31d and resistances 31aa to 31dd. These operational amplifiers are set to have an amplification factor of approximately 1. The alternate current line voltage is applied to the non-inversion input terminal (+) which is grounded through the resistance 21aa to 21dd. Therefore, the side of the first switching circuit of the buffer circuit is set to high impedance and the side of the antenna electrode is set to low impedance. Thus, the current can be applied to the antenna electrode without any an influence on the input side.

The passenger detecting system operates as follows. First, only the switch 18a of the first switching circuit 18 is closed, and the other switch 18b to 18d are set to an opening state. In this case, the output of the sine wave alternate current voltage of the oscillating circuit 11 is applied to the antenna electrode 4a through the resistance 115, the switch 18a, the operational amplifier 31a of the buffer circuit, the connectors 19a. By this, the weak electric field is generated around the antenna electrode 4a and the current flows in accordance with the existence or non-existence of the passenger on the seat.

The line voltage corresponding to the voltage drop in the resistance 115 appears in accordance with current in the transmission system. When only the switch 22a of the second switching circuit 32 is closed, the line voltage relates to the current which flows through the antenna electrode 4a is inputted to the current detecting circuit 15A. The line voltage is subjected to the half wave rectification and smoothing, so that the voltage which corresponds to the input is outputted and then is taken in by the control circuit 20.

Next, the first switching circuit 18 and the second switching circuit 32 are switched such that only the switch 18b and 32b are closed. In this case, the sine wave alternate current signal of the oscillating circuit 11 is applied to the antenna electrode 4b through the resistance 115, the switch 18b, the operational amplifier 31b of the buffer circuit, and the connectors 19b. By this, the weak electric field is generated around the antenna electrode 4b, and the current flows in accordance with the existence or non-existence of the passenger on the seat. The line voltage corresponding to the voltage drop in the resistance 115 appears in accordance with the current in the transmission system.

The line voltage is supplied to the current detecting circuit 15, and is subjected to the half wave rectification and smoothing such that the direct current voltage which corresponds to the input is outputted, and then is taken in by the control circuit 20.

Hereinafter, like the above operations, a suitable antenna electrode is selected through the switching operation of the first and second switching circuit 18 and 32 and the direct current output which corresponded to the existence or non-existence of the passenger is taken in by the control circuit 20.

According to the fifth embodiment, as in the fourth embodiment, the line voltage of the transmission system is subjected to the half wave rectification and smoothing in the current detecting circuit 15 which does not use a diode. Therefore, the change of the direct current conversion level due to the change of the ambient temperature can be restrained, and it is possible to improve the passenger detection precision and the reliability.

Further, because the buffer circuit 31 is inserted in the transmission system, the current which corresponded to the existence or non-existence of the passenger can be applied to the antenna electrode without any influence on the input side. Therefore, as mentioned above, it is possible to improve the passenger detection precision and the reliability.

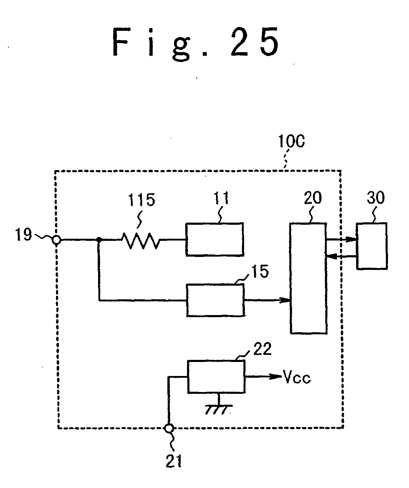

Fig. 25 shows the passenger detecting system according to the sixth embodiment of the present invention. Of the components, the control unit 10C is basically the same as the third embodiment shown in Fig. 22. The different point is in that a single antenna electrode 4 is arranged in the seat section 1a or the back supporting section 1b of the seat 1, or around it (e.g., a dashboard or a door). Also, the switching circuit 18 for the selective switching and connection of the oscillating circuit 11 and the antenna electrode 4 is omitted in conjunction with the antenna electrode 4.

According to the sixth embodiment, because the antenna electrode 4 is one, the amount of data which are obtained from the current detecting circuit 15 becomes little and the passenger detection precision rather declines. However, the circuit structure can be simplified and reduce the cost of the system.

If the antenna electrode 4 is arranged in a dashboard or a side port section of a door or seat, it is detected that the passenger sleeps on the seat passenger so that the interval between the passenger and the antenna electrode 4 became narrow more than necessary. Thus, it is possible to stop the expanding operation of the air bag apparatus or the side air bag apparatus. If the structure is applied to the embodiment illustrated in the Fig. 22 or Fig. 24 which a plurality of antenna electrodes are arranged in the seat 1, the detection becomes possible in relation to the situation of the passenger, in addition to the existence or non-existence of the passenger and the distinguishing of the passenger.

It should be noted that the present invention is not limited to the above embodiments. For example, the antenna electrode may be arranged at the back supporting section of the seat, and the number of antenna electrodes in the seat may be suitably increased or decreased. The antenna electrode may have a rectangular, band, ring and spiral shape in addition to a polygon and the antenna electrode section which is arranged in the base member may be covered with the insulating cover member.

Also, the oscillating circuit is not limited to the quadrature oscillating circuit or the Wien bridge oscillating circuit, and may be a circuit for generating a sine wave alternate current signal such as the high frequency low voltage signal. Also, the output frequency may be set to a value other than 120 KHz and the voltage may be possible to set to a voltage other than 5Vp-p, e.g., 3 to 20 V.

Also, the attachment state, the warning light of the seat belt and so on may be controlled in accordance with the determination result of the control circuit in place of the air bag apparatus. Moreover, as to a passenger determination, in addition to the comparison of the threshold values previously stored in the control circuit and the signal data which relate to the currents which flow through the actual antenna electrodes, the determination of whether the existence or non-existence of the passenger and whether the passenger is an adult may be performed by previously storing a data relating to all kinds of existence or non-existence patterns, the passenger attribute on the seat and so on and by comparing the stored data and the signal data.

It should be noted that the above embodiments may be applied together, as long as discrepancy does not occurs.

As mentioned above, according to the present invention, the electric current flows into the antenna electrode which is opposite to the body portions of the passenger such as the head, the neck, the shoulder, the back of the passenger which is present on the seat, depending upon the difference of the contact area (the opposing area) of the body portion of the passenger and the seat. Therefore, each signal data is normalized in accordance with the maximum one of the signal data relating to each electric current. The summation of these normalized data is compared with the threshold value, so that it is possible to accurately determine whether the passenger is an adult or a child.

Also, each signal data which is taken in by the control circuit is normalized in accordance with the maximum signal data of the signal data, and the gravity of the data is calculated by use of these normalized data. The gravity is compared with the other threshold value, so that it is possible to accurately determine whether the passenger is an adult or a child.

If whether the passenger is an adult or a child is determined in accordance with whether or not the summation ST of the normalized data and the gravity P of the data respectively satisfy the relations of ST > TH1 and P < TH2, the determination precision can be more improved.

Moreover, the signal data are taken in by the control circuit from the interface circuit and are normalized in accordance with the maximum signal data out of the signal data. Therefore, the determination precision is not influenced by the change of the absolute value of the output signal due to the wear coating, the figure of the passenger and so on, so that the reliability of the determination can be more improved. Therefore, the air bag of the air bag apparatus is possible to surely set to either of the expansion allowable state or the expansion inhibited state in accordance with the accurate passenger determination, and undesired expansion of the air bag can be prevented.

As above mentioned, according to the present invention, because the half wave rectifying circuit of the current detecting circuit is composed of one operational amplifier, the circuit structure can be simplified more remarkable than the full wave rectifying circuit, so that the cost can be reduced largely.

Also, because a diode is not used for the half wave rectifying circuit at all, unlike the full wave rectifying circuit, the change of the ambient temperature never changes the direct current output of the current detecting circuit. Therefore, the precision of the determination relating to the existence or non-existence of the passenger in the control circuit is possible to be improved, in addition to the reliability.

Especially, because the existence or non-existence of the passenger is determined in accordance with the signal data from the current detecting circuit which are taken in by the control circuit, a lot of signal data can be taken in the control circuit, if a plurality of antenna electrodes are arranged in the seat. It is possible to improve the determination precision in the control circuit improves and the passenger detection with the higher reliability.

Moreover, because the existence or non-existence of the passenger on the seat and so on are determined in accordance with the signal data relating to the direct current output from the AC-DC converting circuit in the control circuit, and the determination result is transmitted to the air bag apparatus through the communication means, the air bag apparatus can be appropriately controlled according to the existence or non-existence of the passenger.

## Claims

1. A passenger detecting system comprising:
a plurality of antenna electrodes (4a to 4f) provided in a seat (1) to be occupied by a passenger;
a signal generating circuit (11) generating and supplying a supply signal to one of said antenna electrodes (4a to 4f) through a resistance (115) such that an electric field is generated around said antenna electrode (4a to 4f);
a detecting circuit (15) having said resistance (115), and detecting a direct current data signal from a line voltage associated with a voltage drop by said resistance (115), wherein said line voltage changes depending upon an object on said seat (1 );
a control circuit (20) determining from said detected direct current data signal, whether or not a passenger is present on said seat (1) and whether said passenger is an adult or a child;
a switching circuit (18) provided between said resistance (115) and said plurality of antenna electrodes (4a to 4f), and selectively supplying said supply signal to said one of said plurality of antenna electrodes (4a to 4f) in response to a switching control signal from said control circuit (20), wherein said control circuit (20) produces signal data from said detected direct current data signals corresponding to said plurality of antenna electrodes (4a to 4f), **characterized in that** said control circuit (20) furthermore
calculates a summation of said signal data,
determines based on said summation of said signal data, whether or not said passenger is present on said seat (1),
normalizes each of said signal data based on a maximum one of said signal data,
calculates a summation of said normalized signal data, and
determines based on said summation of said normalized signal data, whether said passenger is an adult or a child.

2. A passenger detecting system according to claim 1, further comprising an amplitude control circuit (12) detecting an amplitude of said supply signal and adjusting the amplitude to a predetermined value based on the detected amplitude.

3. A passenger detecting system according to claim 1, wherein said supply signal is an alternate current signal having a frequency of about 120 KHz and a voltage in a range of 5 to 12 V.

4. A passenger detecting system according to any of claims 1 to 3, wherein said detecting circuit (15) includes a converter converting said line voltage of alternate current into a direct current signal.

5. A passenger detecting system according to claim 4, wherein said detecting circuit (15) further includes an impedance converting circuit provided between said resistor and said converter and having a high impedance on an input side and a low impedance on an output side.

6. A passenger detecting system according to any of claims 1 to 3, wherein said detecting circuit (15) includes:
a rectifier rectifying said line voltage of alternate current into a direct current signal in full wave; and
a smoothing circuit producing said direct current data signal from said direct current signal.

7. A passenger detecting system according to any of claims 1 to 3, wherein said detecting circuit (15) includes:
a rectifier rectifying said line voltage of alternate current into a direct current signal in half wave; and
a smoothing circuit producing said direct current data signal from said direct current signal.

8. A passenger detecting system according to claim 7, wherein said rectifier includes an operation amplifier having an inversion terminal connected to a predetermined voltage and a non-inversion terminal connected to said line voltage.

9. A passenger detecting system according to any of claims 1 to 8, further comprising a buffer circuit provided between said resistance and said antenna electrode and having a high impedance on an input side and a low impedance on an output side.

10. A passenger detecting system according to any of claims 1 to 9, wherein said signal generating circuit (11) supplies said supply signal of a direct current,
said detecting circuit (15) includes a switching element connected between said resistance and a ground level and switching between an on state and an off state in response to a control signal from said control circuit (20) such that a pulse signal is supplied to said antenna electrode.

11. A passenger detecting system according to any of claims 1 to 10, further comprising:
a plurality of circuit sets respectively provided for said plurality of antenna electrodes (4a-4f), each of said circuit sets including said signal generating circuit (11) and said detecting circuit (15); and
a switching circuit provided between said control circuit (20) and said plurality of circuit sets, and selectively supplying said control signal to one of said plurality of circuit sets in response to a switching control signal from said control circuit (20).

12. A passenger detecting system according to any of claims 1 to 11, wherein said control circuit (20) further calculates a gravity of said normalized signal data, and determines based on said summation of said normalized signal data and said calculated gravity, whether said passenger is the adult or the child.

13. An air bag apparatus comprising:
a passenger detecting system according to any one of claims 1 to 12; and
an air bag control system, and
wherein said air bag control system is connected to said control circuit (20) and sets an air bag to either of an expansion allowed state and an expansion inhibited state based on the determination result by said control circuit (20).

## Patentansprüche

1. Fahrgast-Erkennungssystem, das Folgendes umfasst:
eine Mehrzahl von Antennenelektroden (4a bis 4f), die in einem von einem Fahrgast zu belegenden Sitz (1) vorgesehen sind,
eine Signalerzeugungsschaltung (11), die ein Speisesignal erzeugt und damit eine der Antennenelektroden (4a bis 4f) über einen Widerstand (115) speist, so dass rings um die Antennenelektrode (4a bis 4f) ein elektrisches Feld erzeugt wird;
eine Detektorschaltung (15), die den Widerstand (115) aufweist und ein Gleichstrom-Datensignal von einer Leitungsspannung in Verbindung mit einem Spannungsabfall durch den Widerstand (115) erfasst, wobei sich die Leitungsspannung in Abhängigkeit von einem Objekt auf dem Sitz (1) ändert;
eine Steuerschaltung (20), die aus dem erfassten Gleichstrom-Datensignal ermittelt, ob sich ein Fahrgast auf dem Sitz (1) befindet oder nicht und ob der Fahrgast ein Erwachsener oder ein Kind ist;
eine Umschalt-Schaltung (18), die zwischen dem Widerstand (115) und der Mehrzahl von Antennenelektroden (4a bis 4f) vorgesehen ist und als Antwort auf ein Umschaltsteuersignal von der Steuerschaltung (20) wahlweise eine aus der Mehrzahl von Antennenelektroden (4a bis 4f) mit dem Speisesignal speist, wobei die Steuerschaltung (20) aus den erfassten Gleichstrom-Datensignalen entsprechend der Mehrzahl von Antennenelektroden (4a bis 4f) Signaldaten erzeugt, **dadurch gekennzeichnet, dass** die Steuerschaltung (20) weiterhin
eine Summierung der Signaldaten berechnet,
auf Basis der Summierung der Signaldaten ermittelt, ob sich der Fahrgast auf dem Sitz (1) befindet oder nicht,
all die Signaldaten auf Basis eines Maximalwerts der Signaldaten normiert,
eine Summierung der normierten Signaldaten berechnet,
auf Basis der Summierung der normierten Signaldaten ermittelt, ob der Fahrgast ein Erwachsener oder ein Kind ist.

2. Fahrgast-Erkennungssystem nach Anspruch 1, das weiterhin eine Amplitudensteuerschaltung (12) aufweist, die eine Amplitude des Speisesignals erfasst und auf Basis der erfassten Amplitude die Amplitude auf einen vorbestimmten Wert einstellt.

3. Fahrgast-Erkennungssystem nach Anspruch 1, bei dem das Speisesignal ein Wechselstromsignal mit einer Frequenz von ungefähr 120 kHz und einer Spannung in einem Bereich von 5 bis 12 V ist.

4. Fahrgast-Erkennungssystem nach einem der Ansprüche 1 bis 3, bei dem die Detektorschaltung (15) einen Wandler enthält, der die Wechselstrom-Leitungsspannung in ein Gleichstromsignal umwandelt.

5. Fahrgast-Erkennungssystem nach Anspruch 4, bei dem die Detektorschaltung (15) weiterhin eine Impedanzwandlungsschaltung enthält, die zwischen dem Widerstand und dem Wandler vorgesehen ist und eine hohe Impedanz auf einer Eingangsseite und eine niedrige Impedanz auf einer Ausgangsseite hat.

6. Fahrgast-Erkennungssystem nach einem der Ansprüche 1 bis 3, bei dem die Detektorschaltung (15) Folgendes enthält:
einen Gleichrichter, der die Wechselstrom-Leitungsspannung in ein Gleichstromsignal vollwellengleichrichtet; und
eine Glättungsschaltung, die das Gleichstrom-Datensignal aus dem Gleichstromsignal erzeugt.

7. Fahrgast-Erkennungssystem nach einem der Ansprüche 1 bis 3, bei dem die Detektorschaltung (15) Folgendes enthält:
einen Gleichrichter, der die Wechselstrom-Leitungsspannung zu einem Gleichstromsignal halbwellengleichrichtet; und
eine Glättungsschaltung, die das Gleichstrom-Datensignal aus dem Gleichstromsignal erzeugt.

8. Fahrgast-Erkennungssystem nach Anspruch 7, bei dem der Gleichrichter einen Operationsverstärker mit einem Umkehrungsanschluss, der mit einer vorbestimmten Spannung verbunden ist, und einem Nichtumkehrungsanschluss, der mit der Leitungsspannung verbunden ist, enthält.

9. Fahrgast-Erkennungssystem nach einem der Ansprüche 1 bis 8, das weiterhin eine Pufferschaltung aufweist, die zwischen dem Widerstand und der Antennenelektrode vorgesehen ist und eine hohe Impedanz auf einer Eingangsseite und eine niedrige Impedanz auf einer Ausgangsseite hat.

10. Fahrgast-Erkennungssystem nach einem der Ansprüche 1 bis 9, bei dem die Signalerzeugungsschaltung (11) das Speisesignal als Gleichstrom liefert,
wobei die Detektorschaltung (15) ein Umschaltelement enthält, das zwischen dem Widerstand und einem Erdpegel verbunden ist und als Antwort auf ein Steuersignal von der Steuerschaltung (20) zwischen einem Einschaltzustand und einem Ausschaltzustand umschaltet, so dass die Antennenelektrode mit einem Impulssignal gespeist wird.

11. Fahrgast-Erkennungssystem nach einem der Ansprüche 1 bis 10, das weiterhin Folgendes aufweist:
eine Mehrzahl von Schaltungssätzen, die jeweils für die Mehrzahl von Antennenelektroden (4a bis 4f) vorgesehen sind, wobei jeder der Schaltungssätze die Signalerzeugungsschaltung (11 ) und die Detektorschaltung (15) enthält; und
eine Umschalt-Schaltung, die zwischen der Steuerschaltung (20) und der Mehrzahl von Schaltungssätzen vorgesehen ist und als Antwort auf ein Umschaltsteuersignal von der Steuerschaltung (20) wahlweise eine aus der Mehrzahl von Schaltungssätzen mit dem Steuersignal speist.

12. Fahrgast-Erkennungssystem nach einem der Ansprüche 1 bis 11, bei dem die Steuerschaltung (20) weiterhin eine Schwere der normierten Signaldaten berechnet und auf Basis der Summierung der normierten Signaldaten und der berechneten Schwere ermittelt, ob der Fahrgast der Erwachsene oder das Kind ist.

13. Airbag-Vorrichtung, die Folgendes aufweist:
ein Fahrgast-Erkennungssystem nach einem der Ansprüche 1 bis 12; und
ein Airbag-Steuersystem, und
wobei das Airbag-Steuersystem mit der Steuerschaltung (20) verbunden ist und auf Basis des Ermittlungsergebnisses durch die Steuerschaltung (20) einen Airbag entweder in einen Zustand Ausdehnung erlaubt oder einen Zustand Ausdehnung verboten versetzt.

## Revendications

1. Système de détection de passager, comprenant :
une pluralité d'électrodes d'antennes (4a à 4f) disposées dans un siège (1) devant être occupé par un passager ;
un circuit générateur de signal (11) générant et délivrant un signal d'alimentation à l'une desdites électrodes d'antennes (4a à 4f) à travers une résistance (115) de façon à ce qu'un champ électrique soit généré au voisinage de ladite électrode d'antenne (4a à 4f) ;
un circuit de détection (15) ayant ladite résistance (115), et détectant un signal de donnée de courant continu à partir d'une tension de ligne associée à une chute de tension produite par ladite résistance (115), dans lequel ladite tension de ligne varie en fonction d'un objet sur ledit siège (1) ;
un circuit de commande (20) déterminant à partir dudit signal de donnée de courant continu détecté, si un passager est présent ou non sur ledit siège (1) et si ledit passager est un adulte ou un enfant ;
un circuit de commutation (18) disposé entre ladite résistance (115) et ladite pluralité d'électrodes d'antennes (4a à 4f), et délivrant sélectivement ledit signal d'alimentation à ladite une de ladite pluralité d'électrodes d'antennes (4a à 4f) en réponse à un signal de commande de commutation provenant dudit circuit de commande (20), dans lequel ledit circuit de commande (20) produit des données de signal à partir desdits signaux de données de courant continu détectés correspondant à ladite pluralité d'électrodes d'antennes (4a à 4f), **caractérisé en outre en ce que** ledit circuit de commande (20)
calcule une sommation desdites données de signaux,
détermine sur la base de ladite sommation desdites données de signaux si ledit passager est présent ou non sur ledit siège (1),
normalise chacune desdites données de signaux sur la base d'un maximum desdites données de signaux,
calcule une sommation desdites données de signaux normalisées, et
détermine, sur la base de ladite sommation desdites données de signaux normalisées si ledit passager est un adulte ou un enfant.

2. Système de détection de passager selon la revendication 1, comprenant en outre un circuit de commande d'amplitude (12) détectant une amplitude dudit signal d'alimentation et ajustant l'amplitude à une valeur prédéterminée sur la base de l'amplitude détectée.

3. Système de détection de passager selon la revendication 1, dans lequel ledit signal d'alimentation est un signal de courant alternatif ayant une fréquence d'environ 120 kHz et une tension dans la gamme de 5 à 12 V.

4. Système de détection de passager selon l'une quelconque des revendications 1 à 3, dans lequel ledit circuit de détection (15) comporte un convertisseur convertissant ladite tension de ligne à courant alternatif en un signal de courant continu.

5. Système de détection de passager selon la revendication 4, dans lequel ledit circuit de détection (15) comporte en outre un circuit de conversion d'impédance disposé entre ladite résistance et ledit convertisseur et ayant une impédance élevée du côté d'une entrée et une faible impédance du côté d'une sortie.

6. Système de détection de passager selon l'une quelconque des revendications 1 à 3, dans lequel ledit circuit de détection (15) comporte :
un redresseur redressant ladite tension de ligne à courant alternatif en un signal de courant continu pleine onde ; et
un circuit de lissage produisant ledit signal de donnée de courant continu à partir dudit signal de courant continu.

7. Système de détection de passager selon l'une quelconque des revendications 1 à 3, dans lequel ledit circuit de détection (15) comporte :
un redresseur redressant ladite tension de ligne à courant alternatif en un signal de courant continu demi-onde ; et
un circuit de lissage produisant ledit signal de donnée de courant continu à partir dudit signal de courant continu.

8. Système de détection de passager selon la revendication 7, dans lequel ledit redresseur comporte un amplificateur opérationnel ayant une borne d'inversion connectée à une tension prédéterminée et une borne de non-inversion connectée à ladite tension de ligne.

9. Système de détection de passager selon l'une quelconque des revendications 1 à 8, comprenant en outre un circuit tampon disposé entre ladite résistance et ladite électrode d'antenne et ayant une impédance élevée du côté d'une entrée et une faible impédance du côté d'une sortie.

10. Système de détection de passager selon l'une quelconque des revendications 1 à 9, dans lequel ledit circuit générateur de signal (11) délivre ledit signal d'alimentation à courant continu,
ledit circuit de détection (15) comporte un élément de commutation connecté entre ladite résistance et un niveau de masse et commutant entre un état passant et un état non passant en réponse à un signal de commande provenant dudit circuit de commande (20) de telle façon qu'un signal d'impulsion soit délivré à ladite électrode d'antenne.

11. Système de détection de passager selon l'une quelconque des revendications 1 à 10, comprenant en outre :
une pluralité d'ensembles de circuits respectivement prévus pour ladite pluralité d'électrodes d'antennes (4a-4f), chacun desdits ensembles de circuits comportant ledit circuit générateur de signal (11) et ledit circuit de détection (15) ; et
un circuit de commutation disposé entre ledit circuit de commande (20) et ladite pluralité d'ensembles de circuits et délivrant séquentiellement ledit signal de commande à l'un de ladite pluralité d'ensembles de circuits en réponse à un signal de commande de commutation provenant dudit circuit de commande (20).

12. Système de détection de passager selon l'une quelconque des revendications 1 à 11, dans lequel ledit circuit de commande (20) calcule en outre une gravité desdites données de signaux normalisées, et détermine sur la base de ladite sommation desdites données de signaux normalisées et de ladite gravité calculée, si ledit passager est un adulte ou un enfant.

13. Appareil à coussin gonflable, comprenant :
un système de détection de passager selon l'une quelconque des revendications 1 à 12 ; et
un système de commande de coussin gonflable, et
dans lequel ledit système de commande de coussin gonflable est connecté audit circuit de commande (20) et fait passer un coussin gonflable dans l'un ou l'autre d'un état de gonflage autorisé et d'un état de gonflage inhibée sur la base du résultat de la détermination effectuée par ledit circuit de commande (20).
